# EUROPEAN PATENT APPLICATION

(11) **EP 4 683 260 A1**
(43) Date of publication of application: **21.01.2026**
(21) Application number: 25189234.5
(22) Date of filing: 14.07.2025
(51) Int. Cl.: H04L 5/00, H04L 5/14, G01S 13/00, H04W 8/22, H04W 52/02

(54) **METHOD OF MULTIPLE PHYSICAL UPLINK SHARED CHANNELS TRANSMISSION AND USER EQUIPMENT**

(30) Priority: 15.07.2024 US 202463671279 P
(71) Applicant: Industrial Technology Research Institute, 310401 Hsinchu (TW)
(72) Inventor: Chen, Jen-Hsien, 621 Jingpu Vil., Minxiong Township, Chiayi County (TW); Lee, Chien-Min, 324 Taoyuan City (TW); Lo, Li-Chung, 407 Taichung City (TW); Wang, Hung-Hsiang, 310 Zhudong Township, Hsinchu County (TW)
(74) Representative: Becker Kurig & Partner Patentanwälte mbB

(57) **Abstract**

A method of multiple physical uplink shared channels (multi-PUSCHs) transmission and a user equipment are provided. The method includes: receiving a downlink control information (DCI) from a network, wherein the DCI indicates a transmission of multi-PUSCHs.

## Description

### BACKGROUND

### Technical Field

The disclosure is directed to a method of multiple physical uplink shared channels (multi-PUSCHs) transmission and a user equipment (UE) using the same.

### Description of Related Art

In wireless communication systems, particularly in 5G communication systems, a base station (BS) may transmit and receive signals using different types depending on the configuration of subcarrier allocation. One such configuration is referred to as a Subband-Fully-Duplex (SBFD) symbol, in which the BS (e.g., gNB) is capable of transmitting and receiving simultaneously within different subbands. To manage self-interference, spatial separation between transmission and reception may be required at the BS, resulting in distinct antenna configurations or beamforming settings for transmission and reception.

In contrast, a non-SBFD symbol does not support simultaneous transmission and reception. The BS must switch between transmission and reception in a time-division manner, eliminating the need for complex interference control. As a result, the antenna configuration of the BS during non-SBFD symbols may differ significantly from the antenna configuration used during SBFD symbols.

Due to the differences in transmission and reception configurations between SBFD and non-SBFD symbols, the antenna setup at the gNB may vary depending on the symbol type. When a UE transmits multiple physical uplink shared channels (PUSCH) across SBFD and non-SBFD symbols, the BS may experience reception inaccuracies due to the inconsistent antenna configuration across symbol types. Moreover, some UEs may lack the capability to support uplink transmissions spanning across different symbol types. This can lead to implementation issues if the scheduling does not account for such limitations.

### SUMMARY

The disclosure is directed to a method of multi-PUSCHs transmission and a UE using the same method.

The present disclosure is directed to a method of multiple physical uplink shared channels (multi-PUSCHs) transmission. The method includes: receiving a downlink control information (DCI) from a network, wherein the DCI indicates a transmission of multi-PUSCHs.

The present disclosure is directed to a UE of multiple physical uplink shared channels (multi-PUSCHs) transmission. The UE includes a transceiver and a processor coupled to the transceiver, wherein the processor is configured to: receive a downlink control information (DCI) from a network via the transceiver, wherein the DCI indicates a transmission of multi-PUSCHs.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of PUSCH transmission according to one embodiment of the present disclosure.
FIG. 2 illustrates a schematic diagram of separate antenna settings for first symbol type and second symbol type according to one embodiment of the present disclosure.
FIG. 3 illustrates a schematic diagram of ISAC operation in different symbol types according to one embodiment of the present disclosure.
FIG. 4 illustrates a schematic diagram of separate antenna settings for different symbol types according to one embodiment of the present disclosure.
FIG. 5 illustrates a schematic diagram of UL transmissions across different symbol types according to one embodiment of the present disclosure.
FIG. 6 illustrates a schematic diagram of a possible issue for SBFD operation according to one embodiment of the present disclosure.
FIG. 7 illustrates a schematic diagram of a possible issue for ISAC operation according to one embodiment of the present disclosure.
FIG. 8 illustrates a schematic diagram of multi-PUSCHs transmission according to one embodiment of the present disclosure.
FIG. 9 illustrates a schematic diagram of multi-PUSCHs transmission according to one embodiment of the present disclosure.
FIG. 10 illustrates a schematic diagram of multi-PUSCHs transmission according to one embodiment of the present disclosure.
FIG. 11 illustrates a schematic diagram of multi-PUSCHs transmission according to one embodiment of the present disclosure.
FIG. 12 illustrates a flowchart of selection of spatial domain transmit filter or SRI according to one embodiment of the present disclosure.
FIG. 13 illustrates a schematic diagram of multi-PUSCHs transmission according to one embodiment of the present disclosure.
FIG. 14 illustrates a schematic diagram of multi-PUSCHs transmission according to one embodiment of the present disclosure.
FIG. 15 illustrates a flowchart of selection of spatial domain transmit filter or SRI according to one embodiment of the present disclosure.
FIG. 16 illustrates a schematic diagram of determination of spatial relation according to one embodiment of the present disclosure.
FIG. 17 illustrates a schematic diagram of determination of spatial relation according to one embodiment of the present disclosure.
FIG. 18 illustrates a schematic diagram of multi-PUSCHs transmission according to one embodiment of the present disclosure.
FIG. 19 illustrates a schematic diagram of determination of spatial relation according to one embodiment of the present disclosure.
FIG. 20 illustrates a schematic diagram of determination of spatial relation according to one embodiment of the present disclosure.
FIG. 21 illustrates a flowchart of selection of reliable spatial relation or SRI according to one embodiment of the present disclosure.
FIG. 22 illustrates a flowchart of selection of reliable spatial relation or SRI according to one embodiment of the present disclosure.
FIG. 23 illustrates a schematic diagram of multi-PUSCHs transmission according to one embodiment of the present disclosure.
FIG. 24 illustrates a schematic diagram of multi-PUSCHs transmission according to one embodiment of the present disclosure.
FIG. 25 illustrates a schematic diagram of multi-PUSCHs transmission according to one embodiment of the present disclosure.
FIG. 26 illustrates a flowchart of selection of SRI or reliable spatial relation according to one embodiment of the present disclosure.
FIG. 27 illustrates a flowchart of selection of SRI or reliable spatial relation according to one embodiment of the present disclosure.
FIG. 28 illustrates a schematic diagram of multi-PUSCHs transmission according to one embodiment of the present disclosure.
FIG. 29 illustrates a schematic diagram of multi-PUSCHs transmission according to one embodiment of the present disclosure.
FIG. 30 illustrates a flowchart of selection of SRI or reliable spatial relation according to one embodiment of the present disclosure.
FIG. 31 illustrates a schematic diagram of multi-PUSCHs transmission according to one embodiment of the present disclosure.
FIG. 32 illustrates a flowchart of selection of SRI or reliable spatial relation according to one embodiment of the present disclosure.
FIG. 33 illustrates an SRS resource set according to one embodiment of the present disclosure.
FIG. 34 illustrates a schematic diagram of multi-PUSCHs transmission according to one embodiment of the present disclosure.
FIG. 35 illustrates a schematic diagram of multi-PUSCHs transmission according to one embodiment of the present disclosure.
FIG. 36 illustrates a schematic diagram of multi-PUSCHs transmission according to one embodiment of the present disclosure.
FIG. 37 illustrates a schematic diagram of multi-PUSCHs transmission according to one embodiment of the present disclosure.
FIG. 38 illustrates a flowchart of selection of SRI or reliable spatial relation according to one embodiment of the present disclosure.
FIG. 39 illustrates a schematic diagram of multi-PUSCHs transmission according to one embodiment of the present disclosure.
FIG. 40 illustrates a schematic diagram of multi-PUSCHs transmission according to one embodiment of the present disclosure.
FIG. 41 illustrates a schematic diagram of multi-PUSCHs transmission according to one embodiment of the present disclosure.
FIG. 42 illustrates a schematic diagram of multi-PUSCHs transmission according to one embodiment of the present disclosure.
FIG. 43 illustrates a schematic diagram of multi-PUSCHs transmission according to one embodiment of the present disclosure.
FIG. 44 illustrates a schematic diagram of multi-PUSCHs transmission according to one embodiment of the present disclosure.
FIG. 45 illustrates a schematic diagram of uplink control information (UCI) multiplexing according to one embodiment of the present disclosure.
FIG. 46 illustrates a schematic diagram of UL power control for different symbol types according to one embodiment of the present disclosure.
FIG. 47 illustrates a schematic diagram of multi-PUSCHs transmission according to one embodiment of the present disclosure.
FIG. 48 illustrates a schematic diagram of multi-PUSCHs transmission according to one embodiment of the present disclosure.
FIG. 49 illustrates a schematic diagram of multi-PUSCHs transmission according to one embodiment of the present disclosure.
FIG. 50 illustrates a flowchart of a method of multi-PUSCHs transmission according to one embodiment of the present disclosure.
FIG. 51 illustrates a schematic diagram of a UE according to one embodiment of the present disclosure.

### DESCRIPTION OF THE EMBODIMENTS

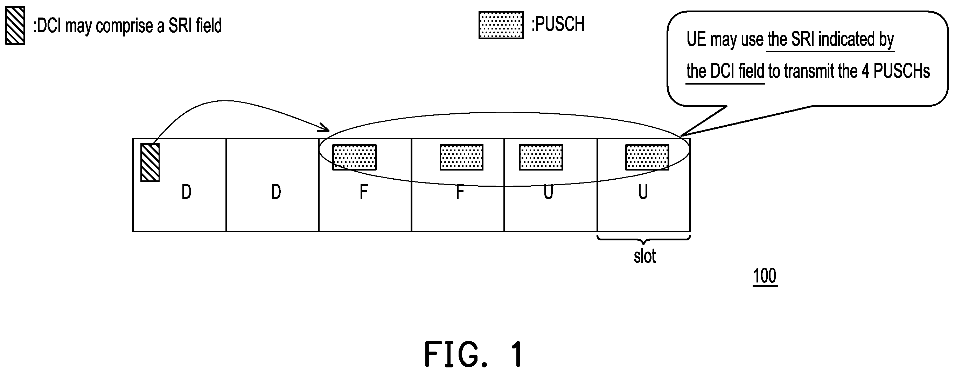

FIG. 1 illustrates a schematic diagram 100 of PUSCH transmission according to one embodiment of the present disclosure, where "D" represents the slot for downlink (DL) reception, "U" represents the slot for uplink (UL) transmission, and "F" represents the flexible slot. A UE may be scheduled with multi-PUSCHs transmission by a configuration such as a single downlink control information (DCI), wherein the DCI may include a "SRS resource indicator" (SRI) field that indicates a sounding reference signal (SRS) from an SRS resource set. The UE may use a spatial relation associated with the SRS to transmit the multi-PUSCHs. The UE may receive the DCI from a network or a BS (e.g., gNB). The multi-PUSCHs may include PUSCHs associated with the same or different symbol types (e.g., first symbol types and second symbol types different from the first symbol types). The DCI may inform the UE to or not to transmit the multi-PUSCHs across different symbol types (e.g., first symbol type and second symbol type).

In time domain duplexing (TDD), the time domain resource is split between downlink (DL) and uplink (UL). Allocation of a limited time duration for the uplink in TDD would result in reduced coverage and increased latency. It would be worth studying the feasibility of allowing the simultaneous existence of downlink and uplink (i.e., full duplex), or more specifically, subband non-overlapping full duplex at the BS (e.g., gNB) side within a conventional TDD band. For SBFD operation, gNB may use a first antenna setting to perform DL or UL in the non-SBFD symbol type, and may use a second antenna setting to perform DL and UL simultaneously in the SBFD symbol type, wherein the second antenna setting may be different from the first antenna setting.

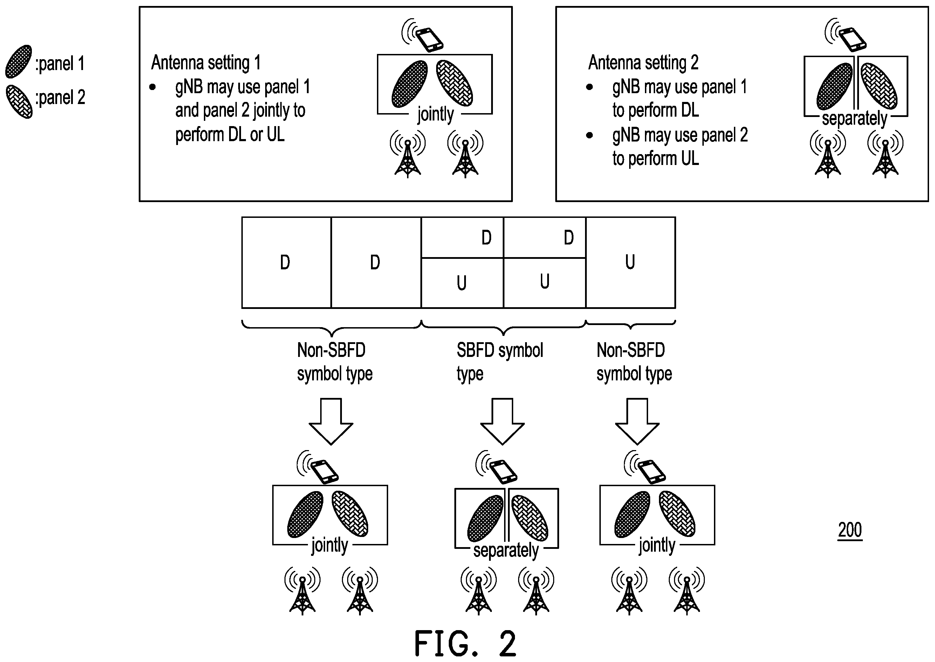

FIG. 2 illustrates a schematic diagram 200 of separate antenna settings for first symbol type and second symbol type according to one embodiment of the present disclosure. The multi-PUSCHs may include PUSCHs associated with different symbol types, including a first symbol type and a second symbol type. The second symbol type may be different from the first symbol type, or the modulation and coding scheme (MCS) of the second symbol type may be different from the MCS of the first symbol type. For example, the first symbol type or the second symbol type may include a non-SBFD symbol type, a SBFD symbol type, a symbol type for communication only, a symbol type for both of communication and sensing, a symbol type for a power saving mode, or a symbol type for a normal mode.

In the present disclosure, the embodiments applied to one set of symbol types may also be applied to another set of symbol types. For example, a method for determining the QCL assumptions or the spatial relation for the SBFD symbol type and the non-SBFD symbol type may also be applied to determining the QCL assumptions or the spatial relation for the symbol type for communication only and the symbol type for both of communication and sensing, or be applied to determining the QCL assumptions or the spatial relation for the symbol type for the power saving mode and the symbol type for the normal mode, and vice versa.

Referring to FIG. 2, the antenna setting 1 may be applied for non-SBFD symbols. When the antenna setting 1 is applied, the gNB may use panel 1 and panel 2 jointly to perform DL or UL transmission. The antenna setting 2 may be applied for SBFD symbols. When the antenna setting 2 is applied, the gNB may use panel 1 to perform DL transmission and use panel 2 to perform UL transmission.

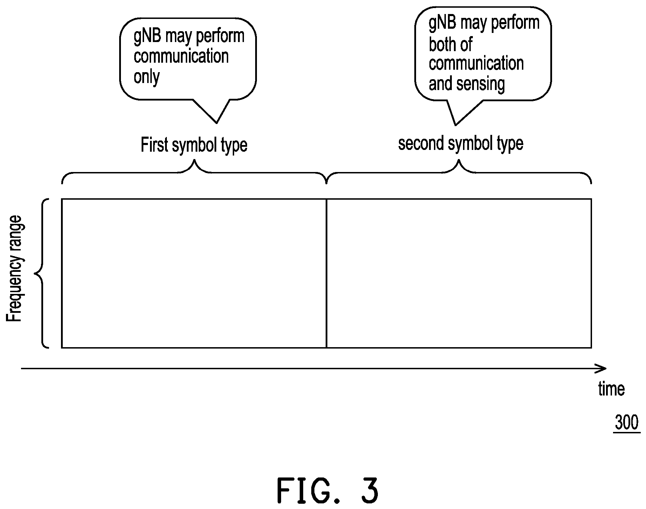

FIG. 3 illustrates a schematic diagram 300 of ISAC operation in different symbol types according to one embodiment of the present disclosure. In integrated sensing and communication (ISAC) operation, gNB may perform communication only within a symbol of the first symbol type, or may perform both of communication and sensing within a symbol of the second symbol type. In ISAC operation, the gNB may use a first antenna setting to perform communication, and may use a second antenna setting to perform both of communication and sensing.

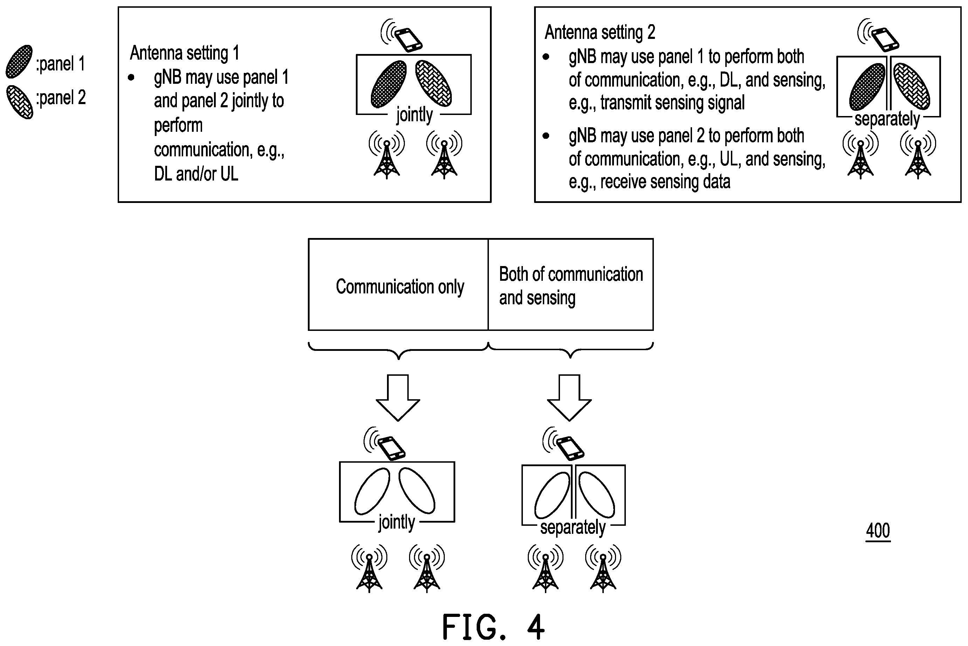

FIG. 4 illustrates a schematic diagram 400 of separate antenna settings for different symbol types according to one embodiment of the present disclosure. The antenna setting 1 may be applied for communication only symbols. When the antenna setting 1 is applied, the gNB may use panel 1 and panel 2 jointly to perform DL or UL transmission. The antenna setting 2 may be applied for both of communication and sensing symbols. When the antenna setting 2 is applied, the gNB may use panel 1 to perform both of communication (e.g., DL transmission) and sensing (e.g., transmitting sensing signal), or the gNB may use panel 2 to perform both of communication (e.g., UL reception) and sensing (e.g., receiving sensing signal).

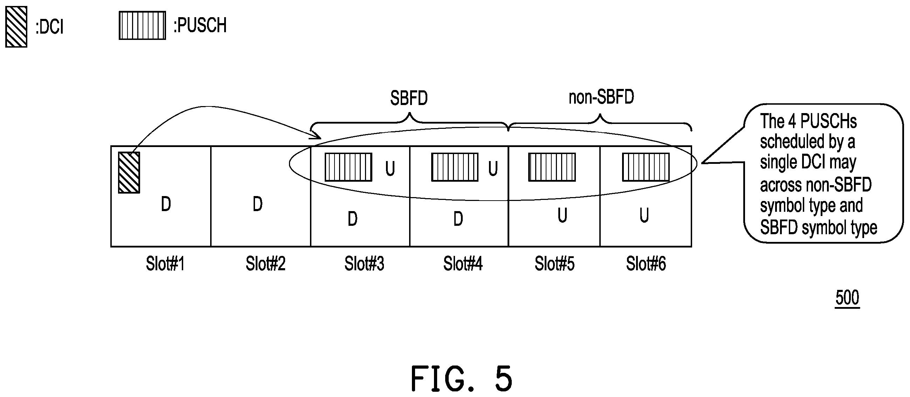

FIG. 5 illustrates a schematic diagram 500 of UL transmissions across different symbol types according to one embodiment of the present disclosure. Multi-PUSCHs scheduled by a single DCI may across SBFD symbol type and non-SBFD symbol type. For UL transmissions and DL receptions across SBFD symbols and non-SBFD symbols in different slots (each transmission/reception within a slot has either all SBFD or all non-SBFD symbols), a SBFD-aware UE may be provided with one of the configurations: configuration 1: the transmissions/receptions could be in SBFD symbols and non-SBFD symbols, as shown in FIG. 5; and configuration 2: the transmissions/receptions may be restricted to SBFD symbols only or non-SBFD symbols only. Configuration 1 may inform the UE to transmit the multi-PUSCHs across different symbol types. Configuration 2 may inform the UE not to transmit the multi-PUSCHs across different symbol types.

In one embodiment, the configuration provided to the SBFD-aware UE may be associated with UE's capability. For example, if UE reports a capability of *acorssTwoSymType* to the network, the network may configure configuration 1 to the UE. Configuration 1 may inform the UE to perform UL transmissions across SBFD symbol type and non-SBFD symbol type, or to perform DL receptions across SBFD symbol type and non-SBFD symbol type. If the UE does not report *acorssTwoSymType* to the network, the network may configure configuration 2 to the UE. Configuration 2 may inform the UE not to perform UL transmissions across SBFD symbol type and non-SBFD symbol type, or not to perform DL receptions across SBFD symbol type and non-SBFD symbol type.

In one embodiment, the configuration (e.g., configuration 1 or 2) may be configured for DL receptions and UL transmissions, respectively. For example, if UE reports a capability of *acorssTwoSymTypeUL* to the network, the network may configure configuration 1 to the UE for UL transmissions. The UE may perform UL transmissions across SBFD symbol type and non-SBFD symbol type based on configuration 1. For example, if the UE reports a capability of *acorssTwoSymTypeDL* to the network, the network may configure configuration 1 to the UE for DL receptions. The UE may perform DL receptions across SBFD symbol type and non-SBFD symbol type based on configuration 1.

In one embodiment, configuration 1 or configuration 2 may be configured for a specific transmission/reception type such as higher layer configured UL/DL transmissions/receptions. In one embodiment, for dynamic scheduled UL/DL transmissions/receptions, the UE may perform the UL/DL transmissions/receptions across SBFD symbol type and non-SBFD symbol type (if any) by default.

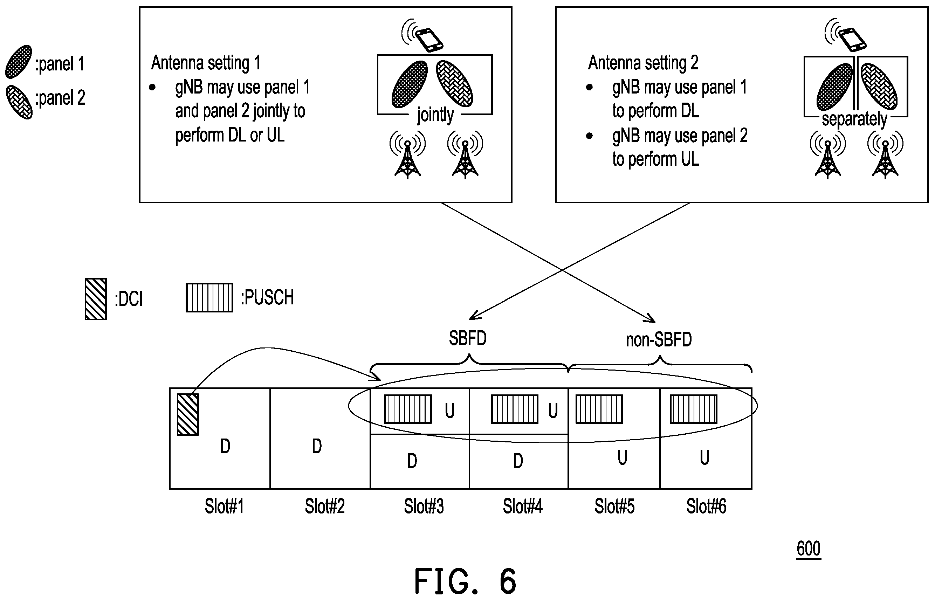

FIG. 6 illustrates a schematic diagram 600 of a possible issue for SBFD operation according to one embodiment of the present disclosure. In one embodiment, the UE may use the same SRI (e.g., same spatial relation) to transmit multi-PUSCHs across different symbol types such as the non-SBFD symbol type and the SBFD symbol type. However, the gNB may use different antenna settings for the non-SBFD symbol and the SBFD symbol respectively. The efficiency of the multi-PUSCHs transmission may be reduced if the UE uses only a single SRI (e.g., a single spatial relation) to transmit the multi-PUSCHs.

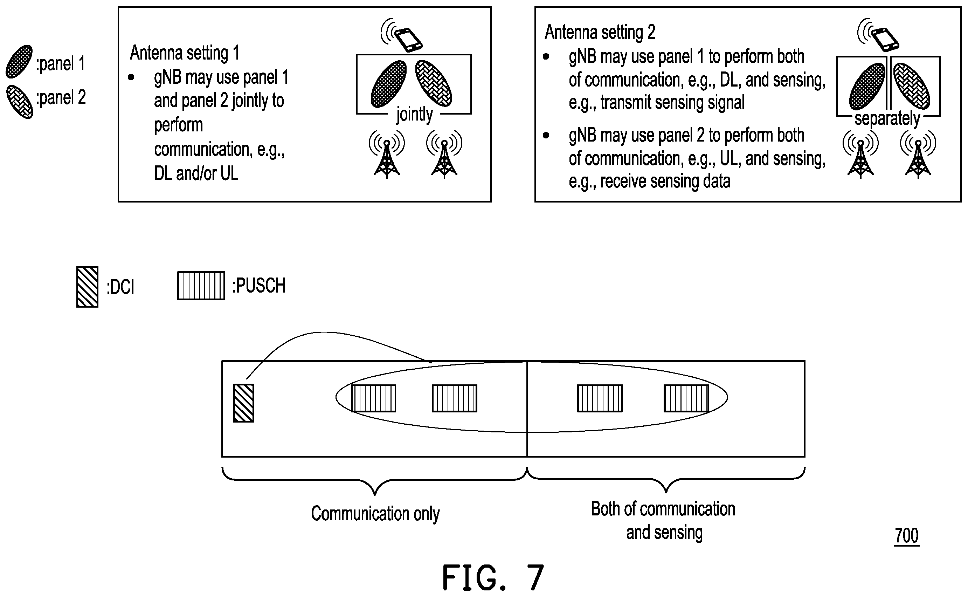

FIG. 7 illustrates a schematic diagram 700 of a possible issue for ISAC operation according to one embodiment of the present disclosure. In one embodiment, the UE may use the same SRI (e.g., same spatial relation) to transmit multi-PUSCHs across different symbol types such as the symbol for communication only and the symbol for both of communication and sensing. However, the gNB may use different antenna settings for different symbol types respectively. The efficiency of the multi-PUSCHs reception may be reduced if the UE uses only a single SRI (e.g., a single spatial relation) to transmit the multi-PUSCHs.

In one embodiment, the UE may determine separate SRI (e.g., separate spatial relations) for multi-PUSCHs transmission in different symbol types.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type. If the UE receives the DCI in the first symbol type, the UE may use the spatial domain transmit filter (or SRI) that is the same as the spatial domain receive filter (or SRI) for the DCI reception to transmit the first set of PUSCHs, and the UE may use the SRI indicated by the DCI to transmit the second set of PUSCHs. If the UE receives the DCI in the second symbol type, the UE may use the spatial domain transmit filter (or SRI) that is the same as the spatial domain receive filter (or SRI) for the DCI reception to transmit the second set of PUSCHs, and the UE may use the SRI indicated by the DCI to transmit the first set of PUSCHs.

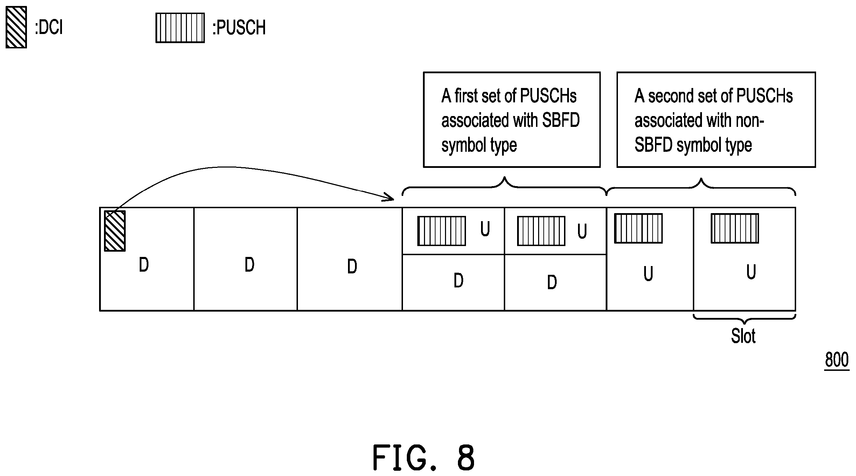

FIG. 8 illustrates a schematic diagram 800 of multi-PUSCHs transmission according to one embodiment of the present disclosure, wherein a first set of PUSCHs is associated with the SBFD symbol type, and a second set of PUSCHs is associated with the non-SBFD symbol type. The UE may be configured with a TCI state in *dl-OrJointTCI-StateList* or *TCI-UL-State.* Since the UE has received a DCI by a spatial domain receive filter in the non-SBFD symbol type, the UE may use a spatial domain transmit filter that is the same as the spatial domain receive filter to transmit the second set of PUSCHs, and the UE may use the SRI indicated by the DCI to transmit the first set of PUSCHs.

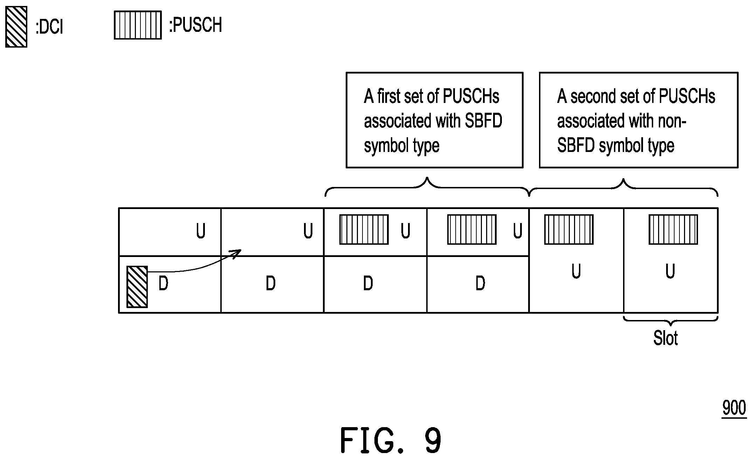

FIG. 9 illustrates a schematic diagram 900 of multi-PUSCHs transmission according to one embodiment of the present disclosure, wherein a first set of PUSCHs is associated with the SBFD symbol type, and a second set of PUSCHs is associated with the non-SBFD symbol type. The UE may be configured with a TCI state in *dl-OrJointTCI-StateList* or *TCI-UL-State.* Since the UE has received a DCI by a spatial domain receive filter in the SBFD symbol type, the UE may use a spatial domain transmit filter that is the same as the spatial domain receive filter to transmit the first set of PUSCHs, and the UE may use the SRI indicated by the DCI to transmit the second set of PUSCHs.

In one embodiment, a UE may be scheduled with a multi-PUSCHs transmission by a DCI, and the multi-PUSCHs transmission may be associated with one specific symbol type. If the UE receives the DCI in the specific symbol type, the UE may use a spatial domain transmit filter which is same as the spatial domain receive filter for DCI reception to transmit the multi-PUSCHs. The UE may ignore the SRI field in the DCI. If the UE receives the DCI in other symbol type, the UE may use the SRI indicated by the DCI to transmit the multi-PUSCHs, wherein the SRI may be indicated by the SRI field of the DCI.

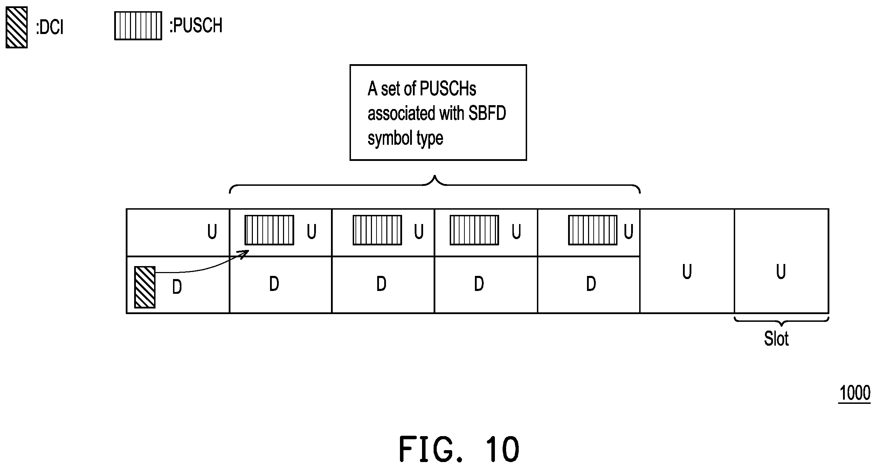

FIG. 10 illustrates a schematic diagram 1000 of multi-PUSCHs transmission according to one embodiment of the present disclosure, wherein a set of PUSCHs is associated with the SBFD symbol type. Since the UE has received a DCI by a spatial domain receive filter in the SBFD symbol type, the UE may use a spatial domain transmit filter which is same as the spatial domain receive filter for DCI reception to transmit the set of PUSCHs.

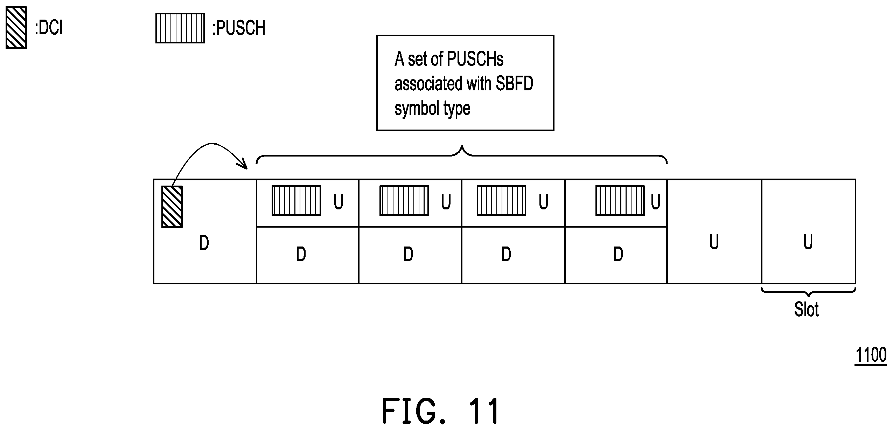

FIG. 11 illustrates a schematic diagram 1100 of multi-PUSCHs transmission according to one embodiment of the present disclosure, wherein a set of PUSCHs is associated with the SBFD symbol type. Since the UE has received a DCI by a spatial domain receive filter in the non-SBFD symbol type, the UE may use the SRI indicated by the DCI to transmit the set of PUSCHs.

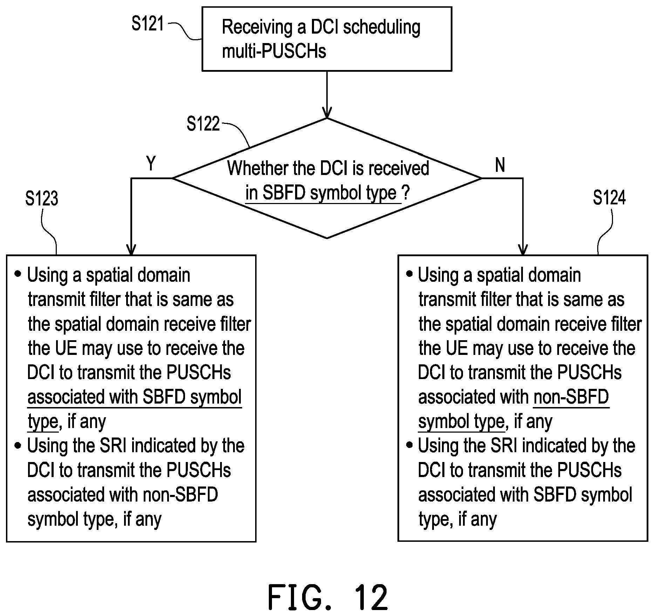

FIG. 12 illustrates a flowchart of selection of spatial domain transmit filter or SRI according to one embodiment of the present disclosure. In step S121, the UE may receive a DCI scheduling multi-PUSCHs. In step S122, the UE may determine whether the DCI is received in the SBFD symbol type. If the DCI is received in SBFD symbol type, the UE may execute step S123. If the DCI is not received in the SBFD symbol type (e.g., DCI is received in the non-SBFD symbol type), the UE may execute step S124. In step S123, the UE may use a spatial domain transmit filter that is the same as the spatial domain receive filter the UE may use to receive the DCI to transmit the PUSCHs associated with the SBFD symbol type (if any). The UE may use the SRI indicated by the DCI to transmit the PUSCHs associated with the non-SBFD symbol type (if any). In step S124, the UE may use a spatial domain transmit filter that is the same as the spatial domain receive filter for DCI reception to transmit the PUSCHs associated with the non-SBFD symbol type (if any). The UE may use the SRI indicated by the DCI to transmit the PUSCHs associated with the SBFD symbol type (if any).

In one embodiment, a UE may be scheduled with a multi-PUSCHs transmission by a DCI, and the multi-PUSCHs transmission may be associated with one specific symbol type, and the UE may use the SRI indicated by the DCI to transmit the multi-PUSCHs. The symbol type of the DCI may or may not be the same as the symbol type of the multi-PUSCHs.

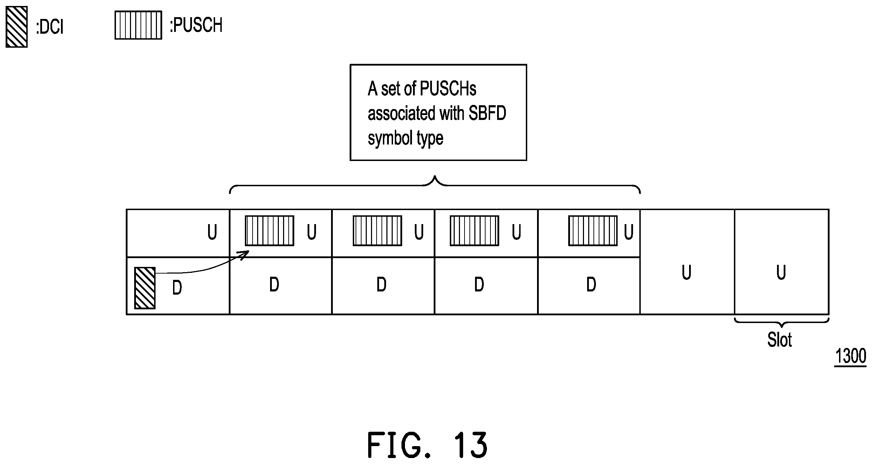

FIG. 13 illustrates a schematic diagram 1300 of multi-PUSCHs transmission according to one embodiment of the present disclosure, wherein a set of PUSCHs is associated with the SBFD symbol type. Since the multi-PUSCHs transmission are associated with one symbol type only, the UE may use the SRI indicated by the DCI to transmit the multi-PUSCHs transmission.

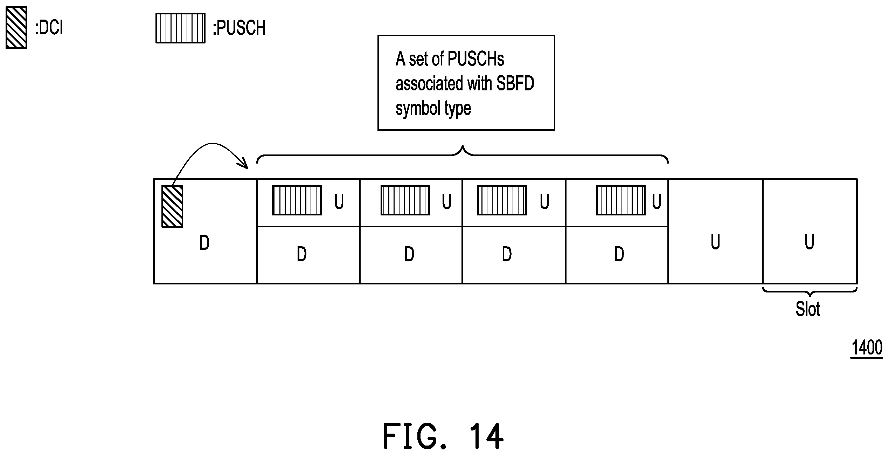

FIG. 14 illustrates a schematic diagram 1400 of multi-PUSCHs transmission according to one embodiment of the present disclosure, wherein a set of PUSCHs is associated with the SBFD symbol type. Since the multi-PUSCHs transmission are associated with one symbol type only, the UE may use the SRI indicated by the DCI to transmit the multi-PUSCHs transmission.

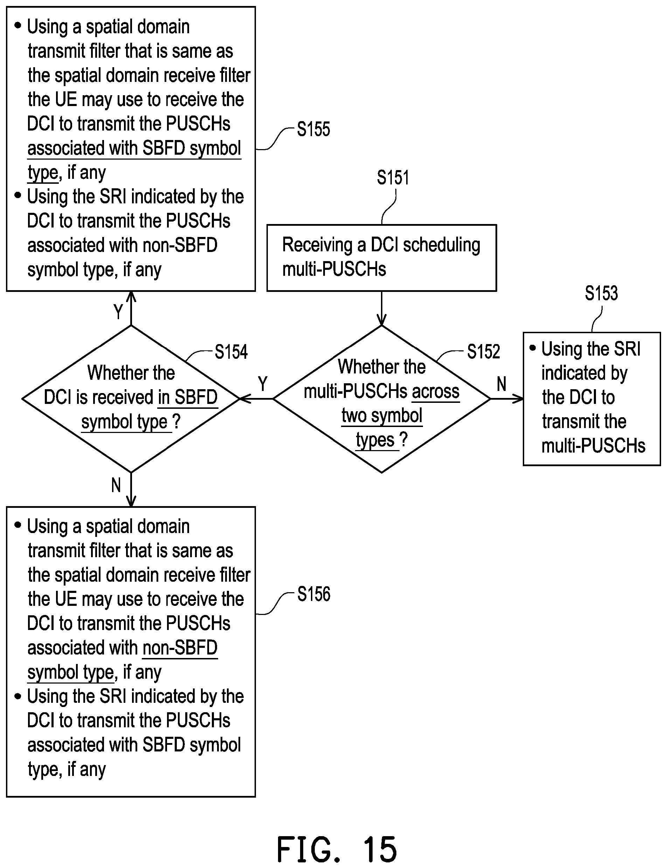

FIG. 15 illustrates a flowchart of selection of spatial domain transmit filter or SRI according to one embodiment of the present disclosure. In step S151, the UE may receive a DCI scheduling multi-PUSCHs. In step S152, the UE may determine whether the multi-PUSCHs is across two symbol types. If the multi-PUSCHs is across two symbol types, the UE may execute step S154. If the multi-PUSCHs is not across two symbol types, the UE may execute step S153. In step S153, the UE may use the SRI indicated by the DCI to transmit the multi-PUSCHs. In step S154, the UE may determine whether the DCI is received in the SBFD symbol type. If the DCI is received in the SBFD symbol type, the UE may execute step S155. If the DCI is not received in the SBFD symbol type (e.g., DCI is received in the non-SBFD symbol type), the UE may execute step S156. In step S155, the UE may use a spatial domain transmit filter that is same as the spatial domain receive filter the UE may use to receive the DCI to transmit the PUSCHs associated with the SBFD symbol type (if any), and the UE may use the SRI indicated by the DCI to transmit the PUSCHs associated with the non-SBFD symbol type (if any). In step S156, the UE may use a spatial domain transmit filter that is same as the spatial domain receive filter the UE may use to receive the DCI to transmit the PUSCHs associated with the non-SBFD symbol type (if any), and the UE may use the SRI indicated by the DCI to transmit the PUSCHs associated with the SBFD symbol type (if any).

In one embodiment, a UE may be configured with a first set of physical uplink control channel (PUCCH) resources for a first symbol type (e.g., non-SBFD symbol type), and a second set of PUCCH resources for a second symbol type (e.g., SBFD symbol type), wherein each PUCCH resource of the first set of PUCCH resources and the second set of PUCCH resources may be configured with one spatial relation, respectively. The UE may determine a first reliable spatial relation as the spatial relation of the PUCCH resource with the lowest identification (ID) of the first set of PUCCH resources to transmit UL signal/channel in the first symbol type. The UE may determine a second reliable spatial relation as the spatial relation of the PUCCH resource with the lowest ID of the second set of PUCCH resources to transmit UL signal/channel in the second symbol type.

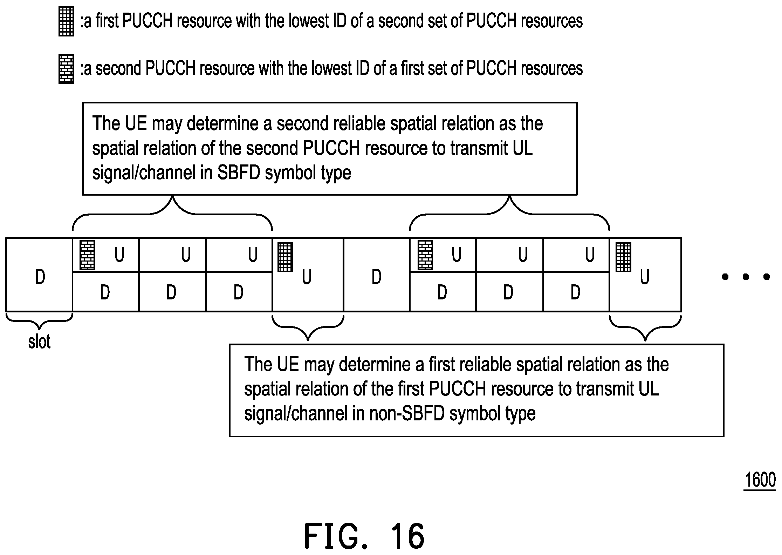

FIG. 16 illustrates a schematic diagram 1600 of determination of spatial relation according to one embodiment of the present disclosure, wherein a first set of PUCCH resources associated with the SBFD symbol type and a second set of PUCCH resources associated with the non-SBFD symbol type may be configured to the UE. Each PUCCH resource of the first set of PUCCH resources may include one spatial relation. Each PUCCH resource of the second set of PUCCH resources may comprise one spatial relation. The UE may determine a first reliable spatial relation as the spatial relation of a PUCCH resource with the lowest ID of the second set of PUCCH resources to transmit UL signal/channel in non-SBFD symbol type. The UE may determine a second reliable spatial relation as the spatial relation of a PUCCH resource with the lowest ID of the first set of PUCCH resources to transmit UL signal/channel in SBFD symbol type.

In one embodiment, a UE may be configured with a set of PUCCH resources, and each PUCCH resource of the set of PUCCH resources may be configured with one or more spatial relations (e.g., two spatial relations), wherein the first spatial relation may be applied to a first symbol type (e.g., non-SBFD symbol type), and the second spatial relation may be applied to a second symbol type(e.g., SBFD symbol type). The UE may determine a first reliable spatial relation as the first spatial relation of the PUCCH resource with the lowest ID of the set of PUCCH resources to transmit UL signal/channel in the first symbol type. The UE may determine a second reliable spatial relation as the second spatial relation of the PUCCH resource with the lowest ID of the set of PUCCH resources to transmit UL signal/channel in the second symbol type.

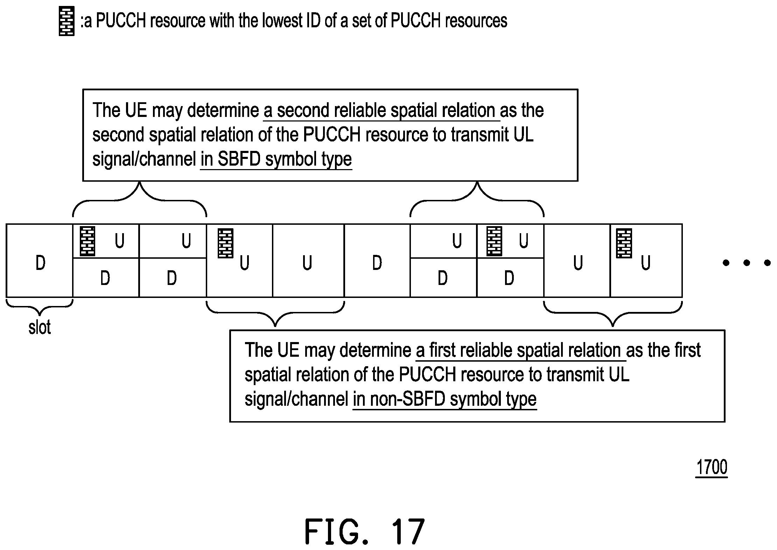

FIG. 17 illustrates a schematic diagram 1700 of determination of spatial relation according to one embodiment of the present disclosure, wherein a set of PUCCH resources may be configured to the UE. Each PUCCH resource of the set of PUCCH resources may include two spatial relations. The first spatial relation may be applied to the non-SBFD symbol type, and the second spatial relation may be applied to the SBFD symbol type.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type. If the UE receives the DCI in the first symbol type, the UE may use the SRI indicated by the DCI to transmit the first set of PUSCHs, and the UE may use a reliable spatial relation (e.g., a default spatial relation) to transmit the second set of PUSCHs. If the UE receives the DCI in the second symbol type, the UE may use the SRI indicated by the DCI to transmit the second set of PUSCHs, and the UE may use the reliable spatial relation to transmit the first set of PUSCHs.

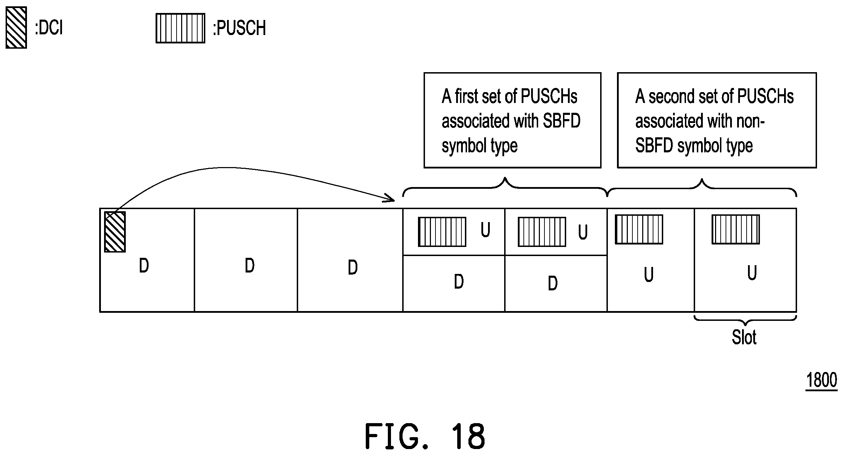

FIG. 18 illustrates a schematic diagram 1800 of multi-PUSCHs transmission according to one embodiment of the present disclosure, wherein a first set of PUCCH resources associated with the SBFD symbol type and a second set of PUCCH resources associated with the non-SBFD symbol type may be configured to the UE. Since UE receives the DCI in the non-SBFD symbol type, the UE may use the SRI indicated by the DCI to transmit the second set of PUSCHs, and the UE may use the reliable spatial relation to transmit the first set of PUSCHs.

In one embodiment, a UE may be scheduled with a multi-PUSCHs transmission by a DCI, and the multi-PUSCHs may be associated with one specific symbol type. If the UE receives the DCI in other symbol type, the UE may use the reliable spatial relation to transmit the multi-PUSCHs. The UE may ignore the SRI field in the DCI. If the UE receives the DCI in the specific symbol type, the UE may use the SRI indicated by the DCI to transmit the multi-PUSCHs.

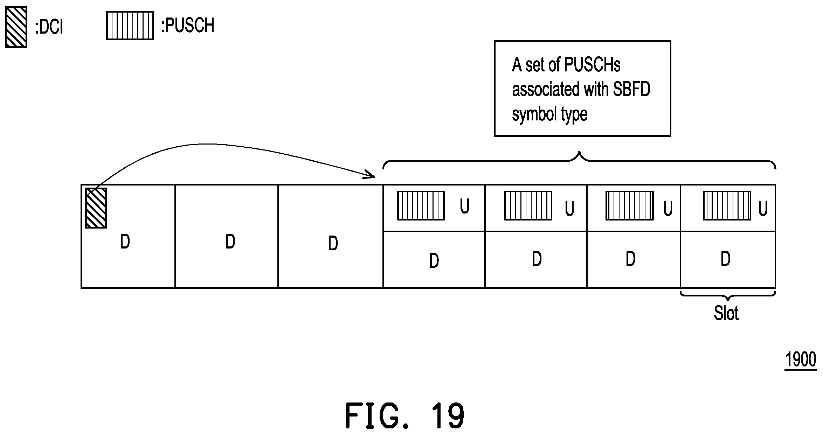

FIG. 19 illustrates a schematic diagram 1900 of determination of spatial relation according to one embodiment of the present disclosure, wherein a set of PUSCHs associated with the SBFD symbol type may be scheduled by a DCI to the UE. Assume that the UE has received the DCI in the non-SBFD symbol type. Since the DCI and the multi-PUSCHs are associated with different symbol types respectively, the UE may use the reliable spatial relation to transmit the multi-PUSCHs.

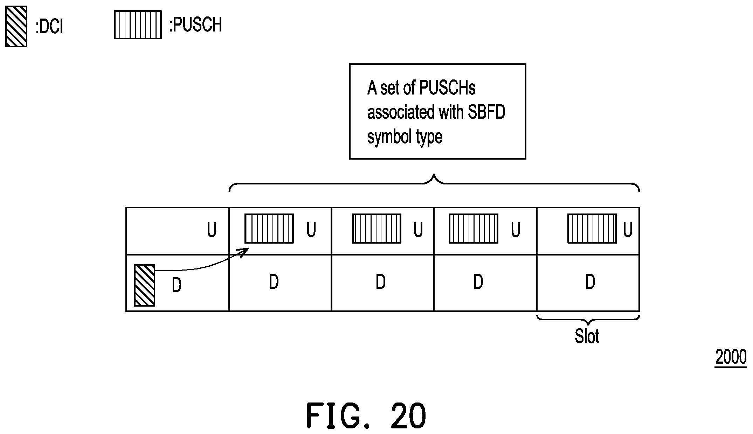

FIG. 20 illustrates a schematic diagram 2000 of determination of spatial relation according to one embodiment of the present disclosure, wherein a set of PUSCHs associated with the SBFD symbol type may be scheduled by a DCI to the UE. Assume that the UE has received the DCI in the SBFD symbol type. Since the DCI and the multi-PUSCHs are associated with same symbol type, the UE may use the SRI indicated by the DCI to transmit the multi-PUSCHs.

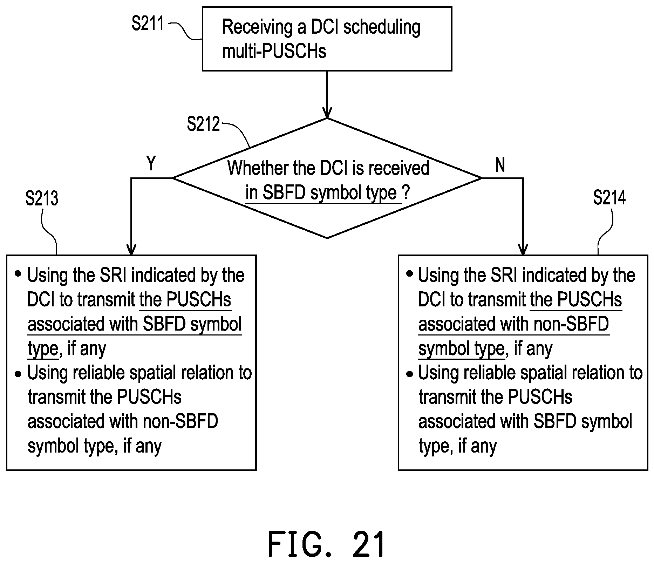

FIG. 21 illustrates a flowchart of selection of reliable spatial relation or SRI according to one embodiment of the present disclosure. In step S211, the UE may receive a DCI scheduling multi-PUSCHs. In step S212, the UE may determine whether the DCI is received in the SBFD symbol type. If the DCI is received in the SBFD symbol type, the UE may execute step S213. If the DCI is not received in the SBFD symbol type (e.g., DCI is received in the non-SBFD symbol type), the UE may execute step S214. In step S213, the UE may use the SRI indicated by the DCI to transmit the PUSCHs associated with the SBFD symbol type (if any), and the UE may use the reliable spatial relation to transmit the PUSCHs associated with the non-SBFD symbol type (if any). In step S214, the UE may use the SRI indicated by the DCI to transmit the PUSCHs associated with the non-SBFD symbol type (if any), and the UE may use the reliable spatial relation to transmit the PUSCHs associated with the SBFD symbol type (if any).

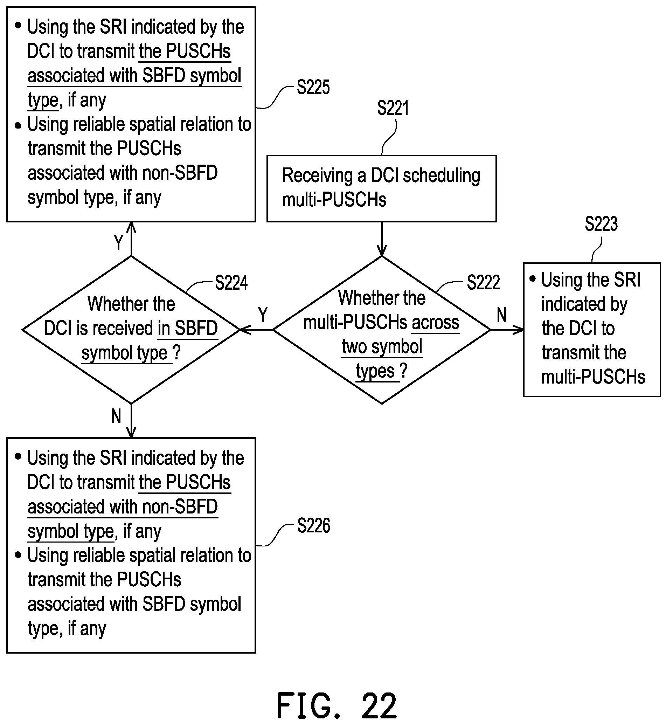

FIG. 22 illustrates a flowchart of selection of reliable spatial relation or SRI according to one embodiment of the present disclosure. In step S221, the UE may receive a DCI scheduling multi-PUSCHs. In step S222, the UE may determine whether the multi-PUSCHs is across two symbol types. If the multi-PUSCHs is across two symbol types, the UE may execute step S224. If the multi-PUSCHs is not across two symbol types, the UE may execute step S223. In step S223, the UE may use the SRI indicated by the DCI to transmit the multi-PUSCHs. In step S224, the UE may determine whether the DCI is received in the SBFD symbol type. If the DCI is received in the SBFD symbol type, the UE may execute step S225. If the DCI is not received in the SBFD symbol type (e.g., DCI is received in the non-SBFD symbol type), the UE may execute step S226. In step S225, the UE may use the SRI indicated by the DCI to transmit the PUSCHs associated with the SBFD symbol type (if any), and the UE may use the reliable spatial relation to transmit the PUSCHs associated with the non-SBFD symbol type (if any). In step S226, the UE may use the SRI indicated by the DCI to transmit the PUSCHs associated with the non-SBFD symbol type (if any), and the UE may use the reliable spatial relation to transmit the PUSCHs associated with the SBFD symbol type (if any).

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type. If the first symbol type is the SBFD symbol type, the UE may use the SRI indicated by the DCI to transmit the first set of PUSCHs, and the UE may use the reliable spatial relation to transmit the second set of PUSCHs. If the second symbol type is the SBFD symbol type, the UE may use the SRI indicated by the DCI to transmit the second set of PUSCHs, and the UE may use the reliable spatial relation to transmit the first set of PUSCHs.

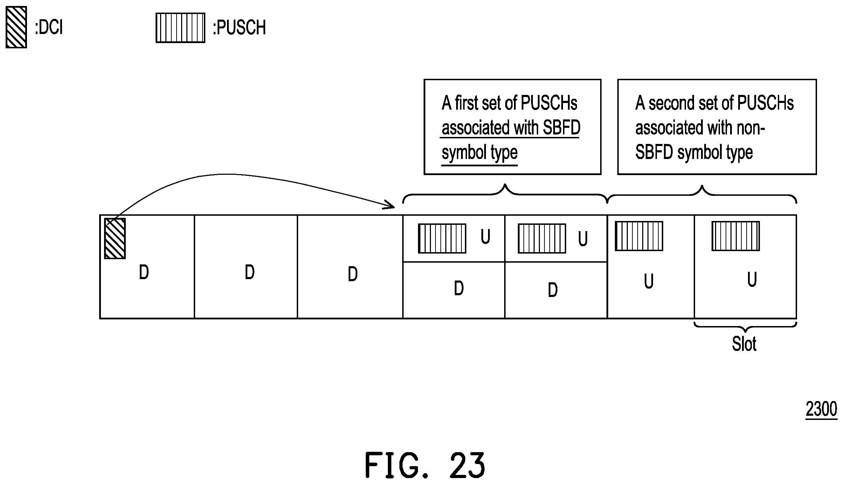

FIG. 23 illustrates a schematic diagram 2300 of multi-PUSCHs transmission according to one embodiment of the present disclosure, wherein a first set of PUSCHs is associated with the SBFD symbol type and a second set of PUSCHs is associated with the non-SBFD symbol type. Since the first set of PUSCHs is associated with the SBFD symbol type, the UE may use the SRI indicated by the DCI to transmit the first set of PUSCHs. Since the second set of PUSCHs is associated with the non-SBFD symbol type, the UE may use the reliable spatial relation to transmit the second set of PUSCHs.

In one embodiment, a UE may be scheduled with a multi-PUSCHs transmission by a DCI, and the multi-PUSCHs transmission may be associated with one specific symbol type. If the specific symbol type is the non-SBFD symbol type, the UE may use the reliable spatial relation to transmit the multi-PUSCHs. The UE may ignore the SRI field in the DCI. If the specific symbol type is the SBFD symbol type, the UE may use the SRI indicated by the DCI to transmit the multi-PUSCHs.

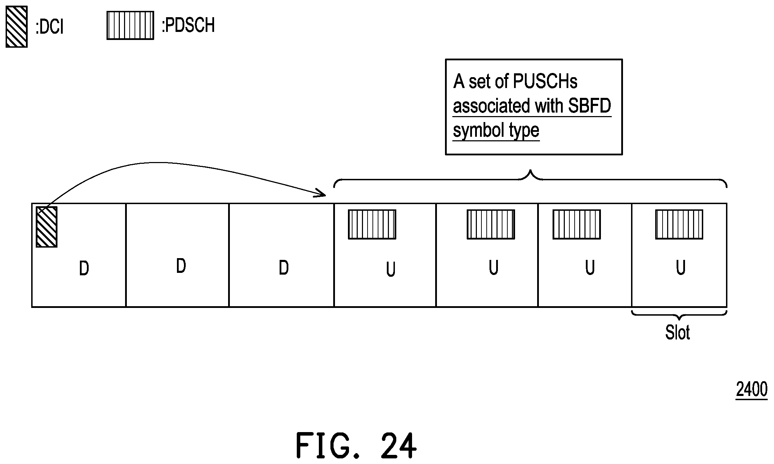

FIG. 24 illustrates a schematic diagram 2400 of multi-PUSCHs transmission according to one embodiment of the present disclosure, wherein a set of PUSCHs is associated with the non-SBFD symbol type. Since the set of PUSCHs is associated with the non-SBFD symbol type, the UE may use the reliable spatial relation to transmit the multi-PUSCHs.

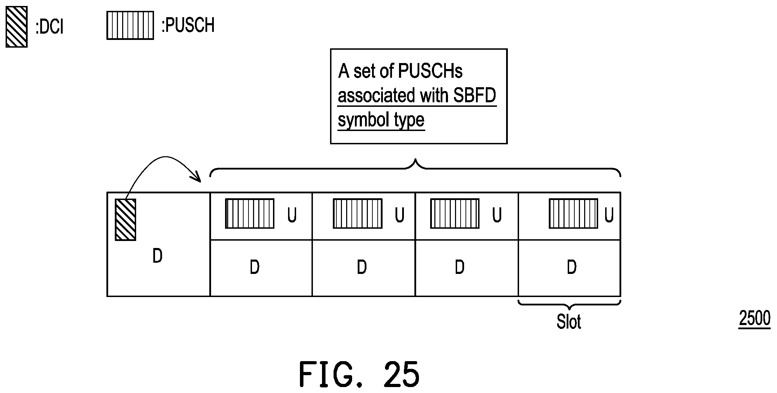

FIG. 25 illustrates a schematic diagram 2500 of multi-PUSCHs transmission according to one embodiment of the present disclosure, wherein a set of PUSCHs is associated with the SBFD symbol type. Since the set of PUSCHs is associated with SBFD symbol type, the UE may use the SRI indicated by the DCI to transmit the multi-PUSCHs.

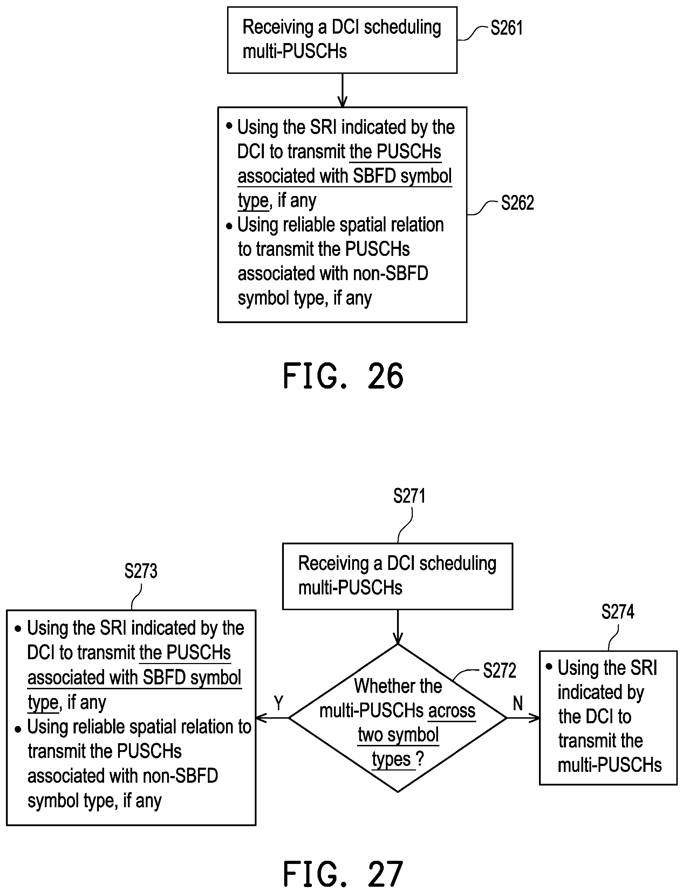

FIG. 26 illustrates a flowchart of selection of SRI or reliable spatial relation according to one embodiment of the present disclosure. In step S261, the UE may receive a DCI scheduling multi-PUSCHs. In step S262, the UE may use the SRI indicated by the DCI to transmit the PUSCHs associated with the SBFD symbol type (if any), and the UE may use the reliable spatial relation to transmit the PUSCHs associated with the non-SBFD symbol type (if any).

FIG. 27 illustrates a flowchart of selection of SRI or reliable spatial relation according to one embodiment of the present disclosure. In step S271, the UE may receive a DCI scheduling multi-PUSCHs. In step S272, the UE may determine whether the multi-PUSCHs is across two symbol types. If the multi-PUSCHs is across two symbol types, the UE may execute step S273. If the multi-PUSCHs is not across two symbol types, the UE may execute step S274. In step S273, the UE may use the SRI indicated by the DCI to transmit the PUSCHs associated with the SBFD symbol type (if any), and the UE may use the reliable spatial relation to transmit the PUSCHs associated with the non-SBFD symbol type (if any). In step S274, the UE may use the SRI indicated by the DCI to transmit the multi-PUSCHs.

In one embodiment, a UE may be configured with an SRS resource set associated with the higher layer parameter usage of value *codebook* or *nonCodeBook,* and the SRS resource set may include N SRS resources, where N is a positive integer. Some SRS resources (e.g., first N/2 SRS resources) of the N SRS resources may be associated with the SBFD symbol type, and the other SRS resources (e.g., last N/2 SRS resources) of the N SRS resources may be associated with the non-SBFD symbol type. The bit length of the SRI field in a DCI may be associated with the number of SRS resources (e.g., N SRS resources) within the SRS resource set.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type. If the codepoint of the SRI field in the DCI points to a SRS resource associated with the first symbol type, the UE may use the SRI indicated by the DCI to transmit the first set of PUSCHs, and the UE may use the reliable spatial relation to transmit the second set of PUSCHs. If the codepoint of the SRI field in the DCI points to a SRS resource associated with the second symbol type, the UE may use the SRI indicated by the DCI to transmit the second set of PUSCHs, and the UE may use the reliable spatial relation to transmit the first set of PUSCHs.

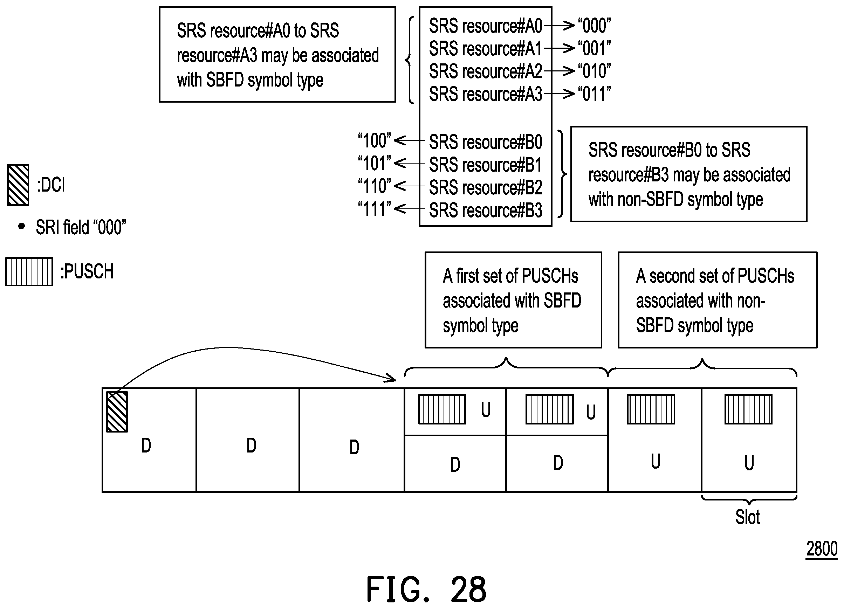

FIG. 28 illustrates a schematic diagram 2800 of multi-PUSCHs transmission according to one embodiment of the present disclosure, wherein a first set of PUSCHs may be associated with the SBFD symbol type, and a second set of PUSCHs may be associated with the non-SBFD symbol type. An SRS resource set associated with higher layer parameter usage of value *codebook* or *nonCodeBook* may be configured to the UE (e.g., via a higher layer signaling from the network), wherein the SRS resource set may include one or more SRS resources associated with the SBFD symbol type and one or more SRS resources associated with the non-SBFD symbol type. For example, the SRS resource set may include SRS resources #A0, #A1, #A2, and #A3 associated with the SBFD symbol type and SRS resources #B0, #B1, #B2, and #B3 associated with the non-SBFD symbol type. The UE may obtain a codepoint (e.g., "000") from the SRI field of the DCI. Since the codepoint of the SRI field points to SRS resource #A0 associated with the SBFD symbol type, the UE may use the SRI indicated by the DCI to transmit the first set of PUSCHs, and the UE may use the reliable spatial relation to transmit the second set of PUSCHs.

In one embodiment, a UE may be scheduled with a multi-PUSCHs transmission by a DCI, and the multi-PUSCHs transmission may be associated with one specific symbol type. The UE may not expect that the codepoint of the SRI field in the DCI points to an SRS resource associated with other symbol type. Therefore, if the codepoint of the SRI field is associated with the other symbol type, the UE may not transmit the multi-PUSCHs transmission according to the SRI indicated by the SRI field.

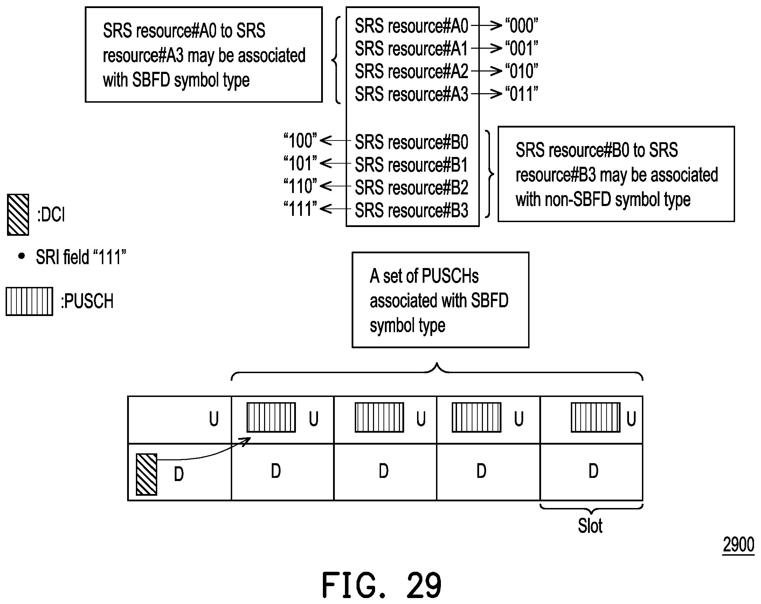

FIG. 29 illustrates a schematic diagram 2900 of multi-PUSCHs transmission according to one embodiment of the present disclosure, wherein a set of PUSCHs may be associated with the SBFD symbol type. An SRS resource set associated with higher layer parameter usage of value *codebook* or *nonCodeBook* may be configured to the UE (e.g., via a higher layer signaling from the network), wherein the SRS resource set may include one or more SRS resources associated with the SBFD symbol type and one or more SRS resources associated with the non-SBFD symbol type. For example, the SRS resource set may include SRS resources #A0, #A1, #A2, and #A3 associated with the SBFD symbol type and SRS resources #B0, #B1, #B2, and #B3 associated with the non-SBFD symbol type. The UE may obtain a codepoint (e.g., "111") from the SRI field of the DCI. Since the set of PUSCHs associated with SBFD symbol type, the UE may not expect that the codepoint of the SRI field point to an SRS resource associated with non-SBFD symbol type (e.g., SRS resource#B3). Therefore, the UE may not transmit the multi-PUSCHs according to the SRI indicated by the SRI field. That is, the UE may not use a spatial relation associated with SRS resource #B3 to transmit the multi-PUSCHs.

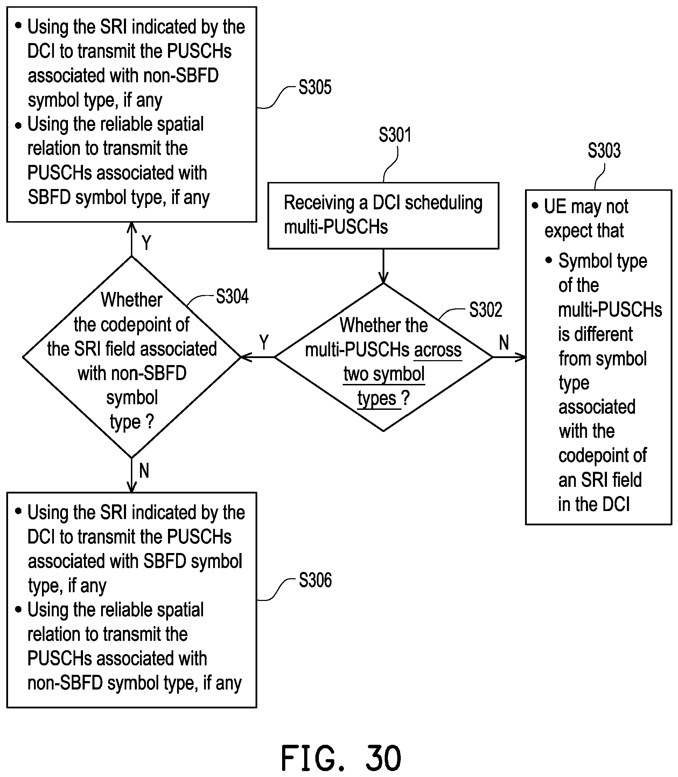

FIG. 30 illustrates a flowchart of selection of SRI or reliable spatial relation according to one embodiment of the present disclosure. In step S301, the UE may receive a DCI scheduling multi-PUSCHs. In step S302, the UE may determine whether the multi-PUSCHs is across two symbol types. If the multi-PUSCHs is across two symbol types, the UE may execute step S303. If the multi-PUSCHs is not across two symbol types, the UE may execute step S304. In step S303, the UE may not expect that the symbol type of the multi-PUSCHs is different from symbol type associated with the codepoint of an SRI field in the DCI. In step S304, the UE may determine whether the codepoint of the SRI field in the DCI is associated with the non-SBFD type. If the codepoint of the SRI field is associated with the non-SBFD type, the UE may execute step S305. If the codepoint of the SRI field is associated with the SBFD type, the UE may execute step S306. In step S305, the UE may use the SRI indicated by the DCI to transmit the PUSCHs associated with the non-SBFD symbol type (if any), and the UE may use the reliable spatial relation to transmit the PUSCHs associated with the SBFD symbol type (if any). In step S306, the UE may use the SRI indicated by the DCI to transmit the PUSCHs associated with the SBFD symbol type (if any), and the UE may use the reliable spatial relation to transmit the PUSCHs associated with the non-SBFD symbol type (if any).

In one embodiment, a UE may be scheduled with a multi-PUSCHs transmission by a DCI, and the multi-PUSCHs transmission may be associated with one specific symbol type. If the codepoint of the SRI field in the DCI points to an SRS resource associated with other symbol type, the UE may use the reliable spatial relation to transmit the multi-PUSCHs.

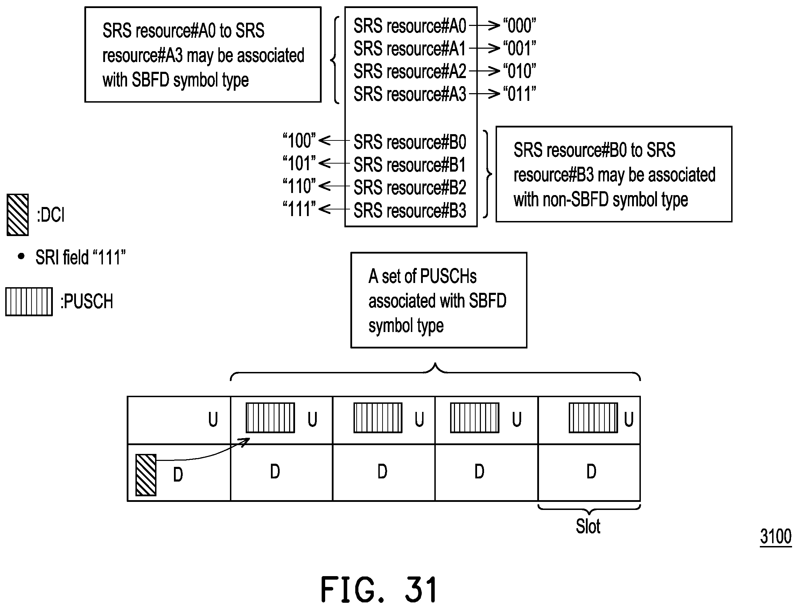

FIG. 31 illustrates a schematic diagram 3100 of multi-PUSCHs transmission according to one embodiment of the present disclosure, wherein a set of PUSCHs may be associated with the SBFD symbol type. An SRS resource set associated with higher layer parameter usage of value *codebook* or *nonCodeBook* may be configured to the UE (e.g., via a higher layer signaling from the network), wherein the SRS resource set may include one or more SRS resources associated with the SBFD symbol type (i.e., a set of SRS resources to be applied to the SBFD symbol type) and one or more SRS resources associated with the non-SBFD symbol type (i.e., a set of SRS resources to be applied to the non-SBFD symbol type). The UE may receive a DCI and the DCI may inform the UE to or not to transmit multi-PUSCHs across the SBFD symbol type and the non-SBFD symbol type. A codepoint of an SRI field in the DCI may identify an SRS resource from the set of SRS resources associated with the SBFD symbol type or identify an SRS resource from the set of SRS resources associated with the non-SBFD symbol type. If the codepoint identify an SRS resource associated with the SBFD symbol type, the UE may transmit one or more PUSCHs associated with the SBFD symbol type by using a spatial relation associated with the SRS resource identified by the codepoint. If the codepoint identify an SRS resource associated with the non-SBFD symbol type, the UE may transmit one or more PUSCHs associated with the non-SBFD symbol type by using a spatial relation associated with the SRS resource identified by the codepoint.

For example, the SRS resource set may include SRS resources #A0, #A1, #A2, and #A3 associated with the SBFD symbol type and SRS resources #B0, #B1, #B2, and #B3 associated with the non-SBFD symbol type. The UE may obtain a codepoint (e.g., "111") from the SRI field of the DCI. Since the set of PUSCHs associated with the SBFD symbol type and the codepoint of the SRI field points to an SRS resource associated with non-SBFD symbol type (e.g., SRS resource #B3), the UE may use the reliable spatial relation to transmit the set of PUSCHs.

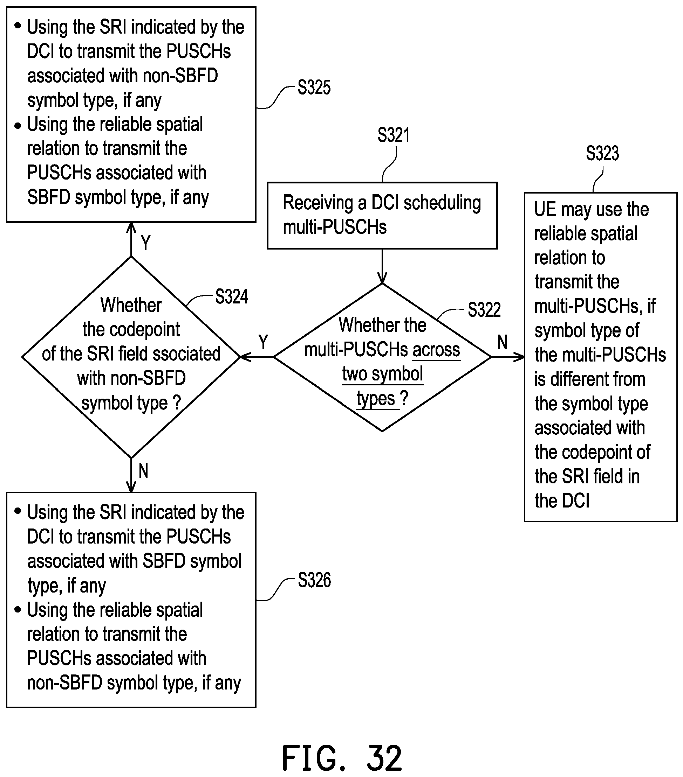

FIG. 32 illustrates a flowchart of selection of SRI or reliable spatial relation according to one embodiment of the present disclosure. In step S321, the UE may receive a DCI scheduling multi-PUSCHs. In step S322, the UE may determine whether the multi-PUSCHs is across two symbol types. If the multi-PUSCHs is across two symbol types, the UE may execute step S323. If the multi-PUSCHs is not across two symbol types, the UE may execute step S324. In step S323, if the symbol type of the multi-PUSCHs is different from the symbol type associated with the codepoint of the SRI field in the DCI, the UE may use the reliable spatial relation to transmit the multi-PUSCHs. In step S324, the UE may determine whether the codepoint of the SRI field in the DCI is associated with the non-SBFD type. If the codepoint of the SRI field is associated with the non-SBFD type, the UE may execute step S325. If the codepoint of the SRI field is associated with the SBFD type, the UE may execute step S326. In step S325, the UE may use the SRI indicated by the DCI to transmit the PUSCHs associated with the non-SBFD symbol type (if any), and the UE may use the reliable spatial relation to transmit the PUSCHs associated with the SBFD symbol type (if any). In step S326, the UE may use the SRI indicated by the DCI to transmit the PUSCHs associated with the SBFD symbol type (if any), and the UE may use the reliable spatial relation to transmit the PUSCHs associated with the non-SBFD symbol type (if any).

In one embodiment, a UE may be configured with an SRS resource set for a given usage of value *codebook* or *nonCodeBook,* and the SRS resource set may include N SRS resources, where N is a positive integer. Some SRS resources (e.g., first N/2 SRS resources) of the N SRS resources may be associated with the SBFD symbol type, and the other SRS resources (e.g., last N/2 SRS resources) of the N SRS resources may be associated with the non-SBFD symbol type. The number of SRS resources associated with the SBFD symbol type may be the same as the number of SRS resources associated with the non-SBFD symbol type.

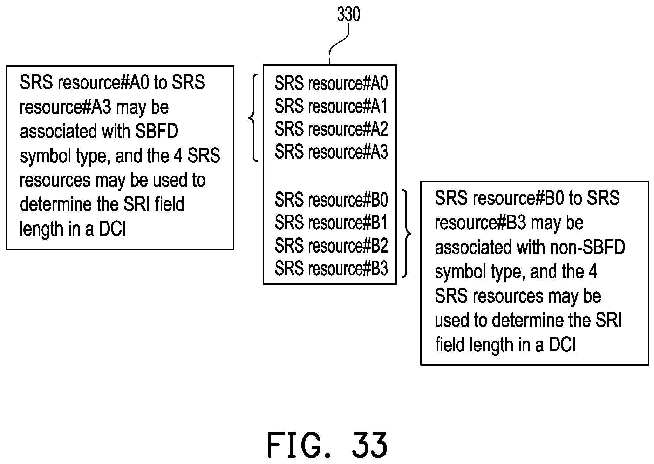

FIG. 33 illustrates an SRS resource set 330 according to one embodiment of the present disclosure. SRS resources #A0 to #A3 may be associated with the SBFD symbol type, and the 4 SRS resources may be used to determine the SRI field length in a DCI. SRS resources #B0 to #B3 may be associated with the non-SBFD symbol type, and the 4 SRS resources may be used to determine the SRI field length in a DCI.

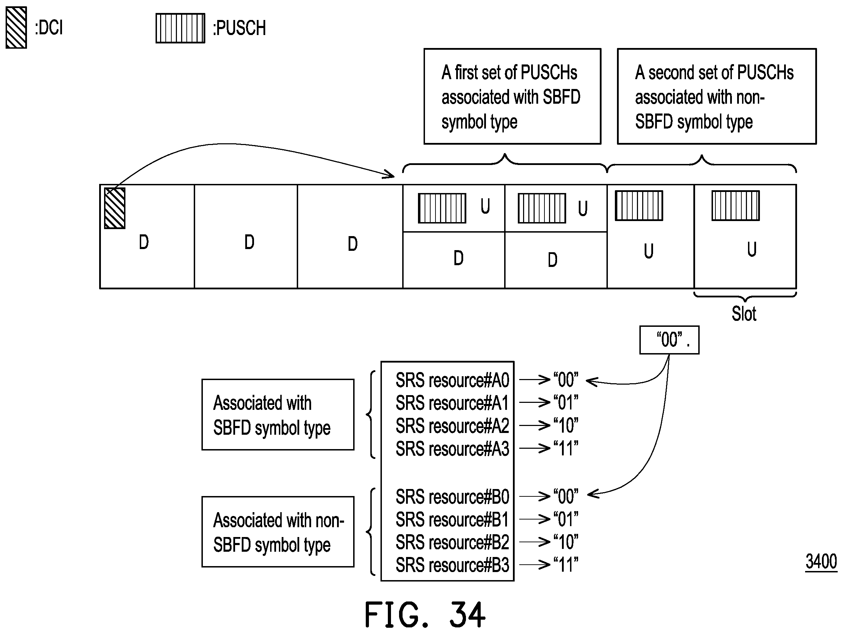

FIG. 34 illustrates a schematic diagram 3400 of multi-PUSCHs transmission according to one embodiment of the present disclosure, wherein a first set of PUSCHs may be associated with the SBFD symbol type, and a second set of PUSCHs may be associated with the non-SBFD symbol type. Since there are multiple SRS resources (e.g., 4 SRS resources) associated with the SBFD symbol type and the non-SBFD symbol type, respectively, the SRI field in the DCI may have two bits. For example, the UE may receive a DCI and obtain a codepoint (e.g., "00") from an SRI field of the DCI. If the codepoint of the SRI field is "00", the UE may use the spatial domain transmit filter associated with SRS resource #A0 to transmit the first set of PUSCHs, and the UE may use the spatial domain transmit filter associated with SRS resource #B0 to transmit the second set of PUSCHs.

In one embodiment, a UE may be configured with an SRS resource set associated with the higher layer parameter usage of value *codebook* or *nonCodeBook,* and the SRS resource set may include at most N SRS resources, where N is a positive integer. When the number of SRS resources of the SRS resource set is less than N, the codepoint of the SRI field associated with the SRS resource set in a DCI may point to "empty".

In one embodiment, a UE may be scheduled with a multi-PUSCHs transmission by a DCI, and the codepoint of the SRI field in the DCI may point to empty. If the codepoint of the SRI field points to empty, the UE may use the reliable spatial relation to transmit the multi-PUSCHs.

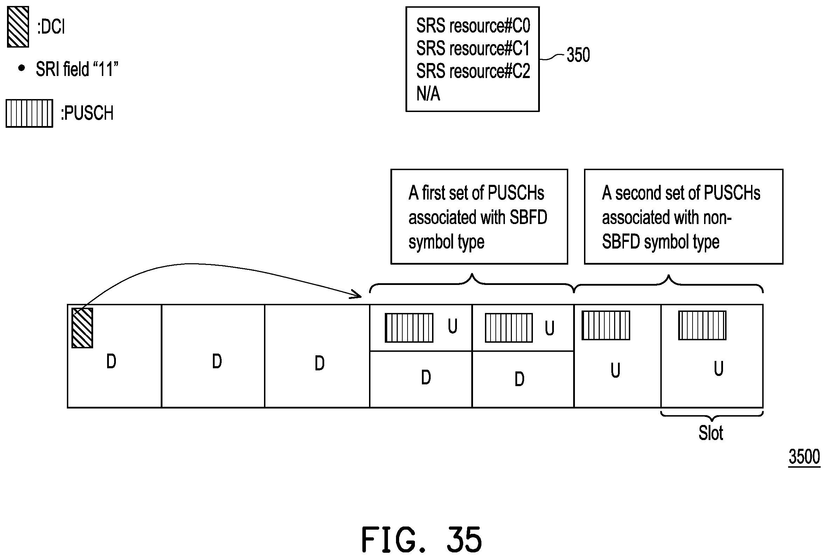

FIG. 35 illustrates a schematic diagram 3500 of multi-PUSCHs transmission according to one embodiment of the present disclosure, wherein a first set of PUSCHs may be associated with the SBFD symbol type, and a second set of PUSCHs may be associated with the non-SBFD symbol type. The UE may be configured with an SRS resource set 350, wherein the SRS resource set 350 may include fields of SRS resources #C0, #C1, and #C2 and an empty field. The UE may receive a DCI and obtain a codepoint from an SRI field of the DCI. If the codepoint of the SRI field points to empty (e.g., codepoint "11" points to "N/A" entry in the SRS resource set 350), the UE may use the reliable spatial relation to transmit the first set of PUSCHs and the second set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type, wherein the codepoint of the SRI field in the DCI may point to empty. If the UE receives the DCI in the first symbol type and the SRI field points to empty, the UE may use the reliable spatial relation to transmit the second set of PUSCHs, and the UE may use a spatial domain transmit filter that is same as the spatial domain receive filter the UE may use to receive the DCI to transmit the first set of PUSCHs. If the UE receives the DCI in the second symbol type and the SRI field points to empty, the UE may use the reliable spatial relation to transmit the first set of PUSCHs, and the UE may use a spatial domain transmit filter that is same as the spatial domain receive filter the UE may use to receive the DCI to transmit the second set of PUSCHs.

For example, referring to FIG. 35, since the codepoint of the SRI field in the DCI points to empty and the UE receives the DCI in non-SBFD symbol type, the UE may use the reliable spatial relation to transmit the first set of PUSCHs, and the UE may use a spatial domain transmit filter that is same as the spatial domain receive filter the UE may use to receive the DCI to transmit the second set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type, wherein the number of PUSCHs of the first set of the PUSCHs may be greater than the number of PUSCHs of the second set of PUSCHs. The UE may use the SRI indicated by the DCI to transmit the first set of PUSCHs, and the UE may use the reliable spatial relation to transmit the second set of PUSCHs.

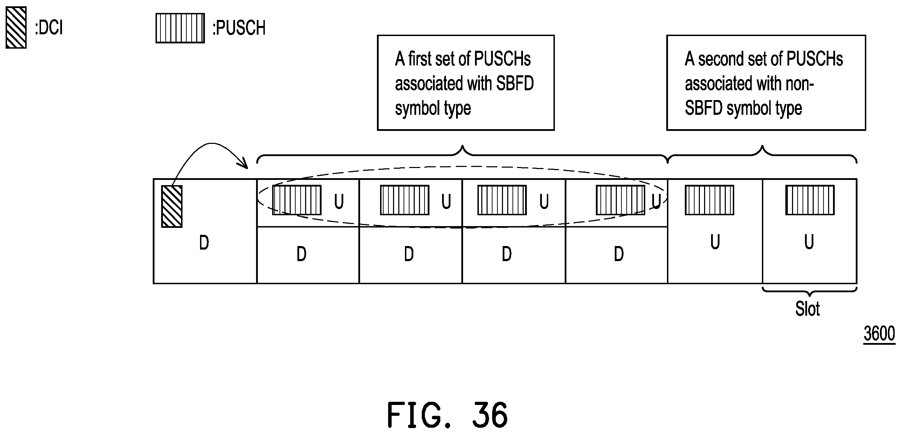

FIG. 36 illustrates a schematic diagram 3600 of multi-PUSCHs transmission according to one embodiment of the present disclosure, wherein a first set of PUSCHs is associated with the SBFD symbol type and a second set of PUSCHs is associated with the non-SBFD symbol type. The UE may determine the number of PUSCHs of the first set of PUSCHs and the number of PUSCHs of the second set of PUSCHs. Since the number of PUSCHs of the first set of PUSCHs is greater than the number of PUSCHs of the second set of PUSCHs, the UE may use the SRI indicated by the DCI to transmit the first set of PUSCHs, and the UE may use reliable spatial relation to transmit the second set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type, wherein the number of PUSCHs of the first set of PUSCHs may be equal to the number of PUSCHs of the second set of PUSCHs. Since the number of PUSCHs of the first set of PUSCHs is equal to the number of PUSCHs of the second set of PUSCHs, the UE could follow any embodiment in this disclosure to transmit the first set of PUSCHs and the second set of PUSCHs.

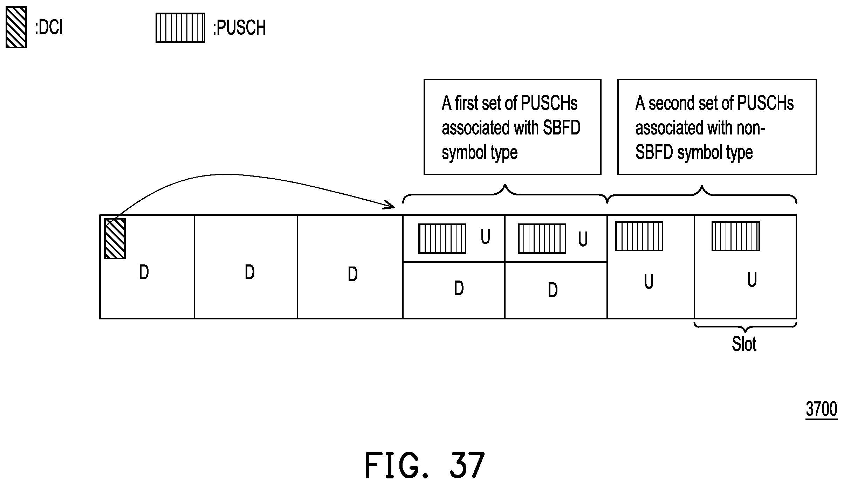

FIG. 37 illustrates a schematic diagram 3700 of multi-PUSCHs transmission according to one embodiment of the present disclosure, wherein a first set of PUSCHs is associated with the SBFD symbol type and a second set of PUSCHs is associated with the non-SBFD symbol type. Since the number of PUSCHs in the first set of PUSCHs and the number of PUSCHs in the second set of PUSCHs are the same, the UE may use the SRI indicated by the DCI to transmit the first set of PUSCHs (e.g., PUSCHs corresponding to the first symbol type or the SBFD symbol type), and the UE may use the reliable spatial relation to transmit the second set of PUSCHs (e.g., PUSCHs corresponding to the second symbol type or the non-SBFD symbol type).

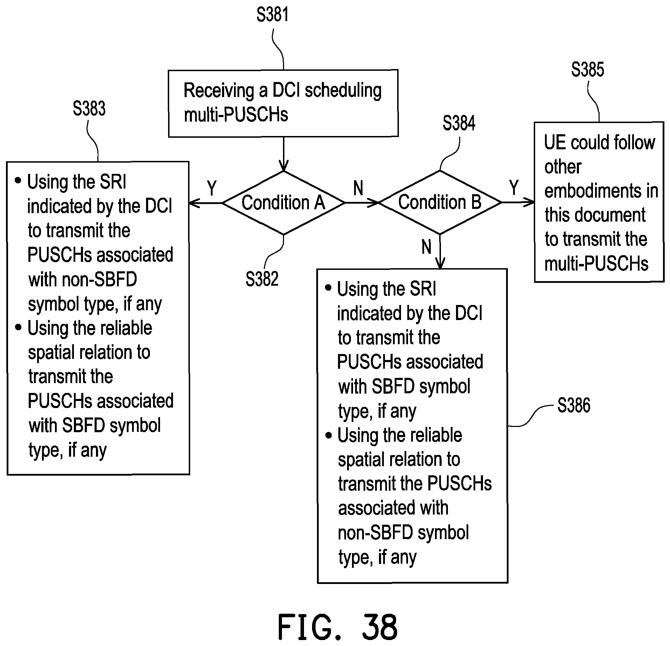

FIG. 38 illustrates a flowchart of selection of SRI or reliable spatial relation according to one embodiment of the present disclosure. In step S381, the UE may receive a DCI scheduling multi-PUSCHs. In step S382, the UE may determine whether condition A is met. Specifically, the UE may determine whether the number of PUSCHs associated with non-SBFD symbol type is greater than the number of PUSCHs associated with SBFD symbol type. If the number of PUSCHs associated with non-SBFD symbol type is greater than the number of PUSCHs associated with SBFD symbol type, the UE may execute step S383. If the number of PUSCHs associated with non-SBFD symbol type is less than or equal to the number of PUSCHs associated with SBFD symbol type, the UE may execute step S384. In step S383, the UE may use the SRI indicated by the DCI to transmit the PUSCHs associated with non-SBFD symbol type (if any), and the UE may use the reliable spatial relation to transmit the PUSCHs associated with SBFD symbol type (if any). In step S384, the UE may determine whether condition B is met. Specifically, the UE may determine whether the number of PUSCHs associated with non-SBFD symbol type is equal to the number of PUSCHs associated with SBFD symbol type. If the number of PUSCHs associated with non-SBFD symbol type is equal to the number of PUSCHs associated with SBFD symbol type, the UE may execute step S385. If the number of PUSCHs associated with non-SBFD symbol type is less than the number of PUSCHs associated with SBFD symbol type, the UE may execute step S386. In step S385, the UE could follow any embodiments in this disclosure to transmit the multi-PUSCHs. In step S386, the UE may use the SRI indicated by the DCI to transmit the PUSCHs associated with SBFD symbol type (if any), and the UE may use the reliable spatial relation to transmit the PUSCHs associated with non-SBFD symbol type (if any).

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type, wherein the SRI indicated by the DCI may be applied to the first symbol type or the second symbol type. The SRI may be explicitly indicated by the DCI, radio resource control (RRC configuration), or medium access control (MAC) control element (CE), or the SRI may be implicitly predetermined by specification. If the SRI is applied to the first symbol type, the UE may use the SRI indicated by the DCI to transmit the first set of PUSCHs, and the UE may use the reliable spatial relation to transmit the second set of PUSCHs. If the SRI is applied to the second symbol type, the UE may use the SRI indicated by the DCI to transmit the second set of PUSCHs, and the UE may use the reliable spatial relation to transmit the first set of PUSCHs.

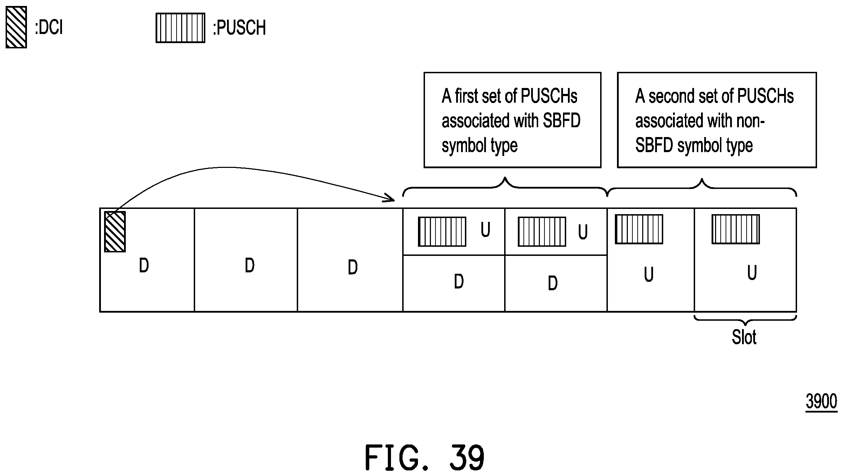

FIG. 39 illustrates a schematic diagram 3900 of multi-PUSCHs transmission according to one embodiment of the present disclosure, wherein a first set of PUSCHs is associated with the SBFD symbol type and a second set of PUSCHs is associated with the non-SBFD symbol type. The UE may receive a DCI including an SRI field. The UE may receive an indication and the indication may inform the UE that the SRI field is applied to the SBFD symbol type. Since the SRI indicated by the DCI is applied to the SBFD symbol type, the UE may use the SRI to transmit the first set of PUSCHs, and the UE may use the reliable spatial relation to transmit the second set of PUSCHs.

In one embodiment, a UE may be configured with two SRS resource sets for a given usage of value *codebook* or *nonCodeBook,* wherein the first SRS resource set may be associated with a first symbol type (e.g., SBFD symbol type), and the second SRS resource set may be associated with a second symbol type (e.g., non-SBFD symbol type). The number of SRS resources in the first SRS resource set may be the same as the number of SRS resources in the second SRS resource set.

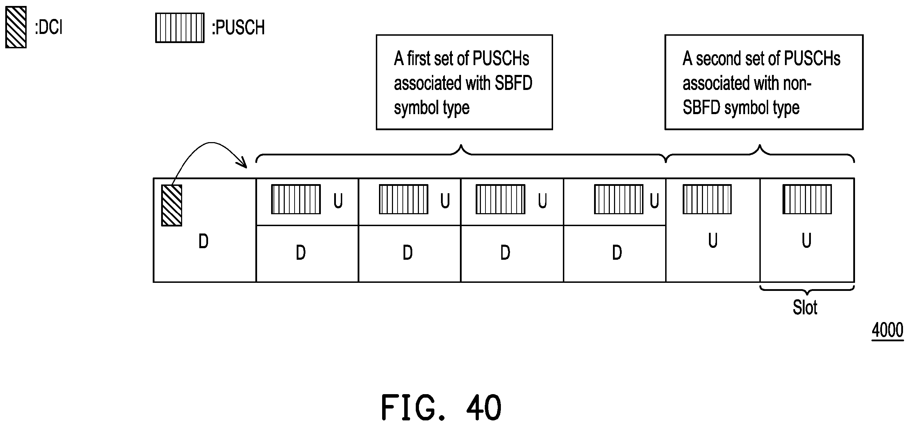

FIG. 40 illustrates a schematic diagram 4000 of multi-PUSCHs transmission according to one embodiment of the present disclosure, wherein a first set of PUSCHs is associated with the SBFD symbol type and a second set of PUSCHs is associated with the non-SBFD symbol type. The UE may receive a DCI and an SRI indicated by the DCI may be applied to both of the first SRS resource set and the second SRS resources set. Since the first set of PUSCHs is associated with SBFD symbol, the UE may use the SRI indicated by the DCI to transmit the first set of PUSCHs, wherein the SRS resource identified by the SRI may be associated with the first SRS resource set. The first SRS resource set may be associated with the SBFD symbol type. Since the second set of PUSCHs is associated with non-SBFD symbol, the UE may use the SRI indicated by the DCI to transmit the second set of PUSCHs, wherein the SRS resource identified by the SRI may be associated with the second SRS resource set. The second SRS resource set may be associated with the non-SBFD symbol type.

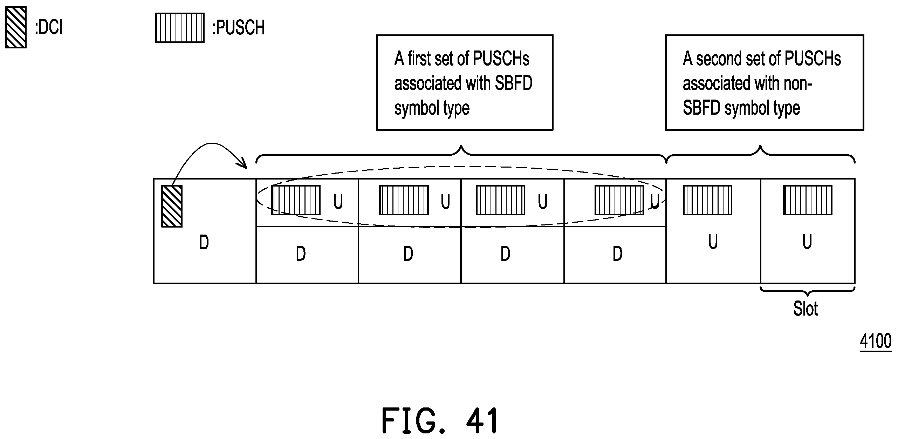

FIG. **41** illustrates a schematic diagram 4100 of multi-PUSCHs transmission according to one embodiment of the present disclosure, wherein a first set of PUSCHs associated with the SBFD symbol type and a second set of PUSCHs associated with the non-SBFD symbol type. For a given usage of value *codebook* or *nonCodebook,* a first SRS resource set may be configured to a UE, and the first SRS resource set may be associated with the SBFD symbol type. For the given usage of value *codebook* or *nonCodebook,* a second SRS resource set may be configured to the UE, and the second SRS resource set may be associated with the non-SBFD symbol type. Since the number of PUSCHs of the first set of PUSCHs is greater than the number of PUSCHs of the second set of PUSCHs, the UE may use the SRI indicated by the DCI to transmit the first set of PUSCHs, wherein the SRS resource identified by the SRI may be associated with the first SRS resource set. The UE may use the reliable spatial relation to transmit the second set of PUSCHs.

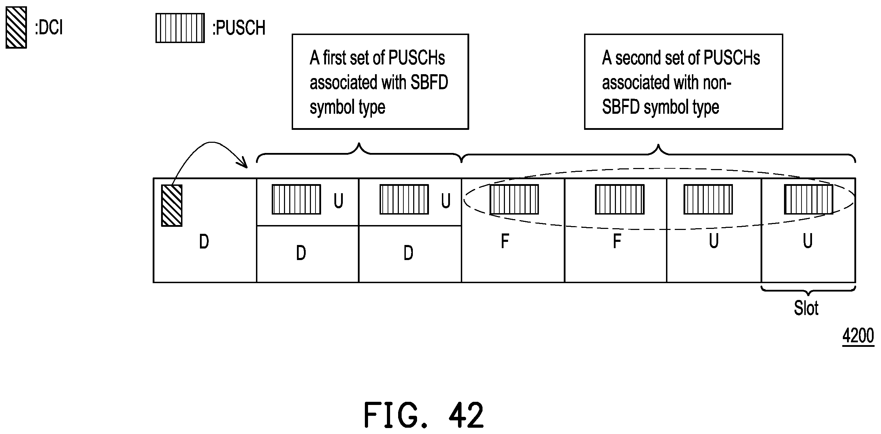

FIG. 42 illustrates a schematic diagram 4200 of multi-PUSCHs transmission according to one embodiment of the present disclosure, wherein a first set of PUSCHs is associated with the SBFD symbol type and a second set of PUSCHs is associated with the non-SBFD symbol type. For a given usage of value *codebook* or *nonCodebook,* a first SRS resource set may be configured to a UE, and the first SRS resource set may be associated with the SBFD symbol type. For the given usage of value *codebook* or *nonCodebook,* a second SRS resource set may be configured to the UE, and the second SRS resource set may be associated with the non-SBFD symbol type. Since the number of PUSCHs of the second set of PUSCHs is greater than the number of PUSCHs of the first set of PUSCHs, the UE may use the SRI indicated by the DCI to transmit the second set of PUSCHs, wherein the SRS resource identified by the SRI may be associated with the second SRS resource set. The UE may use the reliable spatial relation to transmit the first set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type, wherein the DCI may include one or more SRI fields (e.g., two SRI fields). The first SRI field may be associated with the first symbol type and the second SRI field may be associated with the second symbol type. The UE may use the first SRI indicated by the DCI (i.e., SRS resource identified by the codepoint of the first SRI field in the DCI) to transmit the first set of PUSCHs. The UE may use the second SRI indicated by the DCI (i.e., SRS resource identified by the codepoint of the second SRI field in the DCI) to transmit the second set of PUSCHs. The bit length of the first SRI field may be the same as the bit length of the second SRI field. The number of the SRS resources which can be identified by the first SRI field (e.g., first SRS resource set) may be the same as the number of the SRS resources which can be identified by the second SRI field (e.g., second SRS resource set).

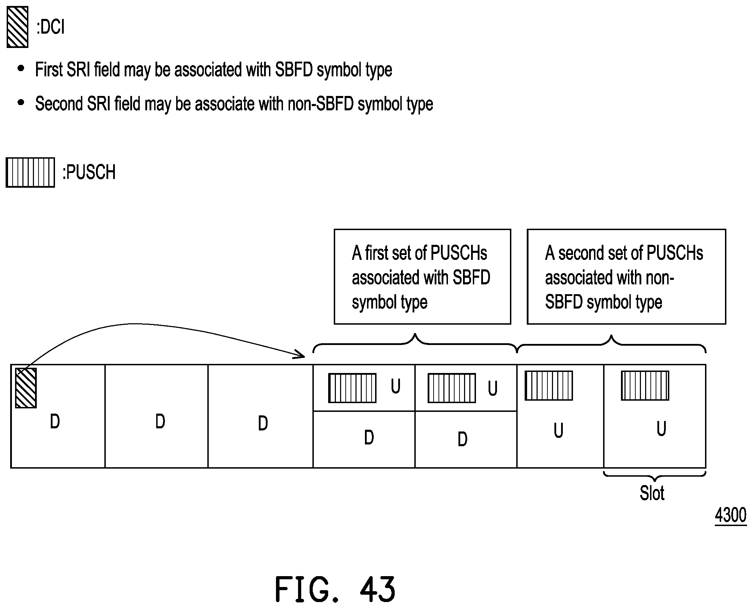

FIG. 43 illustrates a schematic diagram 4300 of multi-PUSCHs transmission according to one embodiment of the present disclosure, wherein a first set of PUSCHs is associated with the SBFD symbol type and a second set of PUSCHs is associated with the non-SBFD symbol type. The UE may receive a DCI and the DCI may include a first SRI field associated with the SBFD symbol type and a second SRI field associated with the non-SBFD symbol type. The UE may use the first SRI field indicated by the DCI to transmit the first set of PUSCHs. The UE may use the second SRI field indicated by the DCI to transmit the second set of PUSCHs.

In one embodiment, a UE may be scheduled with a multi-PUSCHs transmission by a DCI, and the multi-PUSCHs may be associated with one specific symbol type, wherein the DCI may include one or more SRI fields (e.g., two SRI fields). The first SRI field may be associated with a first symbol type and the second SRI field may be associated with a second symbol type. If the specific symbol type is the same as the first symbol type, the UE may use the first SRI field indicated by the DCI to transmit the multi-PUSCHs. The UE may ignore the second SRI field in the DCI. If the specific symbol type is the same as the second symbol type, the UE may use the second SRI field indicated by the DCI to transmit the multi-PUSCHs. The UE may ignore the first SRI field in the DCI.

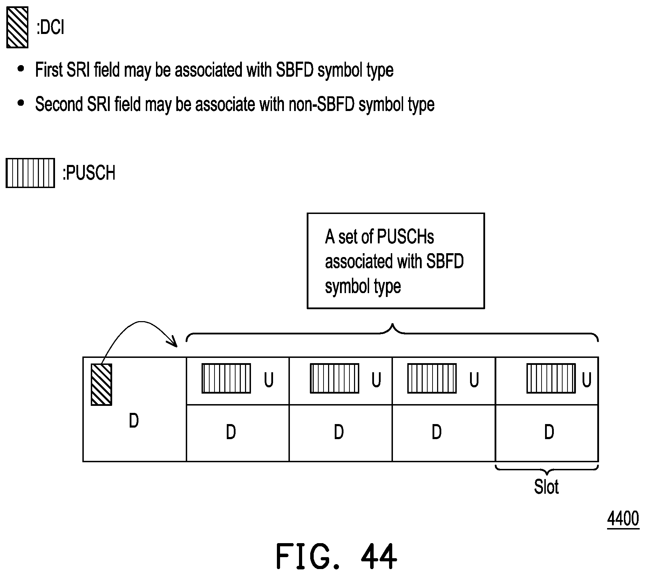

FIG. 44 illustrates a schematic diagram 4400 of multi-PUSCHs transmission according to one embodiment of the present disclosure, wherein a set of PUSCHs associated with the SBFD symbol type may be configured to the UE. The UE may receive a DCI and the DCI may include a first SRI field associated with the SBFD symbol type and a second SRI field associated with the non-SBFD symbol type. The UE may use the first SRI field indicated by the DCI to transmit the set of PUSCHs. The UE may ignore the second SRI field in the DCI.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type, wherein the UE may be provided with two MCSs. The UE may use the SRI indicated by the DCI to transmit the first set of PUSCHs and the second set of PUSCHs, wherein the first MCS may be applied to the first set of PUSCHs, and the second MCS and/or the first MCS may be applied to the second set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type, wherein the UE may be provided with a first MCS by the DCI and may be further provided with a second MCS by an RRC configuration, MAC CE, or DCI. The first MCS in the DCI may be applied to the first set of PUSCHs, and the first MCS and/or the second MCS may be applied to the second set of PUSCHs if the following conditions are met: the first symbol type is the non-SBFD symbol type and the second symbol type is the SBFD symbol type; the first symbol type is the SBFD symbol type and the second symbol type is the non-SBFD symbol type; the UE receives the DCI in the first symbol type; or the codepoint of the SRI field in the DCI is associated with the first symbol type. In one embodiment, the second MCS may be a delta value corresponding to the first MCS. For example, the second MCS may be equal to the sum of the first MCS and the delta value.

For PUCCH multiplexing with PUSCH, a UE may be provided with different Beta offset values for different symbol types. In one embodiment, one Beta offset table may be configured to the UE, and an offset value may further be configured to the UE. A Beta offset value from the Beta offset table may be used for PUCCH multiplexing with PUSCH in one symbol type, and the offset value and/or the Beta offset value from the Beta offset table may be used for PUCCH multiplexing with PUSCH in the other symbol type. In one embodiment, one or more Beta offset tables (e.g., two Beta offset tables), such as a first Beta offset table and a second Beta offset table, may be configured to the UE. A Beta offset value from the first Beta offset table may be used for PUCCH multiplexing with PUSCH in one symbol type, and a Beta offset value from the second Beta offset table may be used for PUCCH multiplexing with PUSCH in the other symbol type. In one embodiment, one Beta offset table may be configured to the UE, and one or more offset values (e.g., two offset values including a first offset value and a second offset value) may further be configured to the UE. A Beta offset value from the Beta offset table and/or the first offset value may be used for PUCCH multiplexing with PUSCH in one symbol type, and the Beta offset value from the Beta offset table and/or the second offset value may be used for PUCCH multiplexing with PUSCH in the other symbol type.

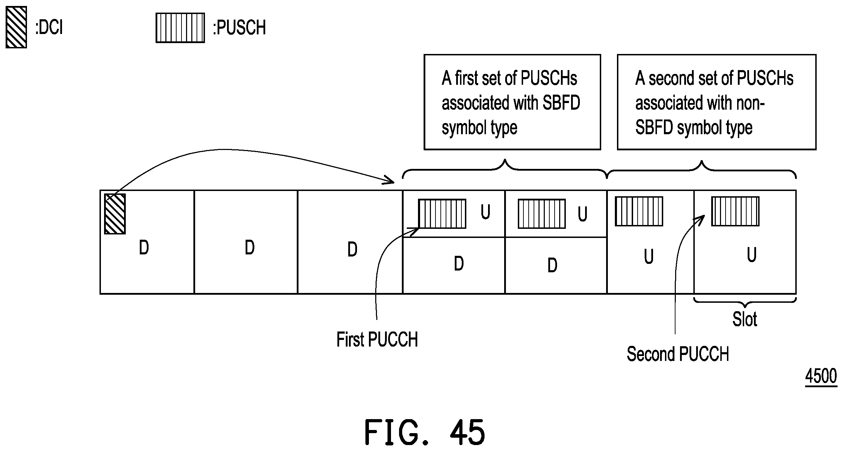

FIG. 45 illustrates a schematic diagram 4500 of uplink control information (UCI) multiplexing according to one embodiment of the present disclosure, wherein a first set of PUSCHs is associated with the SBFD symbol type and a second set of PUSCHs is associated with the non-SBFD symbol type. The UE may be configured with a first beta offset value and a second beta offset value. The UE may use the first beta offset value for the first PUCCH multiplexing with the PUSCH associated with the SBFD symbol type. The UE may use the second beta offset value for the second PUCCH multiplexing with the PUSCH associated with the non-SBFD symbol type.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type, wherein the UE may be provided with a first beta offset value by a DCI and may be further provided with a second beta offset value by an RRC configuration, MAC CE, or DCI. The first beta offset value in the DCI may be applied to the first set of PUSCHs, and the first beta offset value and/or the second beta offset value may be applied to the second set of PUSCHs, if the following conditions are met: the first symbol type is the non-SBFD symbol type, and the second symbol type is the SBFD symbol type; the first symbol type is the SBFD symbol type, and the second symbol type is the non-SBFD symbol type; the UE receives the DCI in the first symbol type; or the codepoint of the SRI field in the DCI is associated with the first symbol type. The second beta offset value may be a delta value corresponding to the first beta offset value. For example, the second beta offset value may be equal to the sum of the first beta offset value and the delta value.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type, wherein the UE may be provided with a first alpha value by a DCI and may be further provided with a second alpha value by an RRC configuration, MAC CE, or DCI. The first alpha value in the DCI may be applied to the first set of PUSCHs, and the first alpha value and/or the second alpha value may be applied to the second set of PUSCHs, if the following conditions are met: the first symbol type is the non-SBFD symbol type, and the second symbol type is the SBFD symbol type; the first symbol type is the SBFD symbol type, and the second symbol type is the non-SBFD symbol type; the UE receives the DCI in the first symbol type; or the codepoint of the SRI field in the DCI is associated with the first symbol type. The second alpha value may be a delta value corresponding to the first alpha value. For example, the second alpha value may be equal to the sum of the first alpha value and the delta value.

For example, referring to FIG.45, the UE may use a first alpha value for the first PUCCH multiplexing with the PUSCH associated with the SBFD symbol type, and the UE may use a second alpha value for the second PUCCH multiplexing with the PUSCH associated with the non-SBFD symbol type.

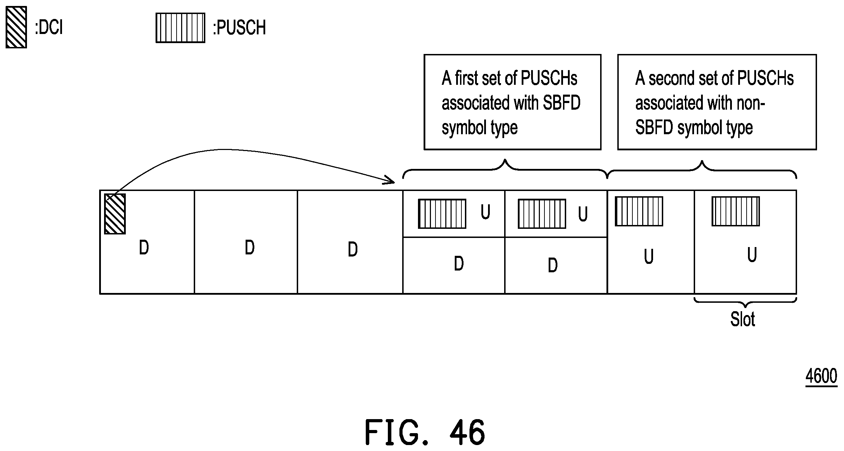

FIG. 46 illustrates a schematic diagram 4600 of UL power control for different symbol types according to one embodiment of the present disclosure, wherein a first set of PUSCHs is associated with the SBFD symbol type and a second set of PUSCHs is associated with the non-SBFD symbol type. To perform UL transmission (e.g., SRS, PUCCH, or PUSCH), a UE may be provided with separate power control in a first symbol type (e.g., SBFD symbol type) and a second symbol type (e.g., non-SBFD symbol type) in different slots (including repetition and non-repetition). The UE may use a first UL transmission power to transmit the first set of PUSCHs, and the UE may use a second UL transmission power to transmit the second set of PUSCHs, wherein the second UL transmission power may be different from the first UL transmission power. It should be noted that, separate power control in this disclosure could be separate parameters associated with close loop power control or open loop power control.

The first UL transmission power for the first set of PUSCHS may be provided to the UE by a transmission power control (TPC) command in the DCI, if the following conditions are met: the first symbol type is the non-SBFD symbol type, and the second symbol type is the SBFD symbol type; the first symbol type is the SBFD symbol type, and the second symbol type is the non-SBFD symbol type; the UE receives the DCI in the first symbol type; or the codepoint of the SRI field in the DCI is associated with the first symbol type. The second UL transmission power for the second set of PUSCHS may be provided to the UE by the other DCI (e.g., DCI format 2_3). The other DCI may have one bit to indicate the second UL transmission power could be applied to a specific symbol type (e.g., "0" for the first symbol type, "1" for the second symbol type).

The first UL transmission power for the first set of PUSCHS and the second UL transmission power for the second set of PUSCHS may be provided to the UE by the TPC commands in the DCI, wherein the first TPC command in the DCI may be applied to the first set of PUSCHs, and the second TPC command in the DCI may be applied to the second set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type, wherein the DCI may include a SBFD resource available field with one bit. If the SBFD resource available field indicates a first value (e.g., "1"), the UE may use a first spatial relation to transmit the first set of PUSCHs, and the UE may use a second spatial relation to transmit the second set of PUSCHs, wherein the second spatial relation may be the same as or different from the first spatial relation. The first spatial relation or the second spatial relation could be determined according to any embodiment in this disclosure. If the SBFD resource available field indicates a second value (e.g., "0"), the UE may use the spatial relation indicated by the DCI to transmit the first set of PUSCHs and the second set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type. If the UE receives the DCI in the first symbol type, the UE may use the SRI indicated by the DCI to transmit the first set of PUSCHs, and the UE may not transmit the second set of PUSCHs. If the UE receives the DCI in the second symbol type, the UE may use the SRI indicated by the DCI to transmit the second set of PUSCHs, and the UE may not transmit the first set of PUSCHs.

For example, referring to FIG. 46, Since the UE receives the DCI in the non-SBFD symbol type, the UE may use the SRI indicated by the DCI to transmit the second set of PUSCHs, and the UE may not transmit the first set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type. If the first symbol type is the SBFD symbol type, the UE may use the SRI indicated by the DCI to transmit the first set of PUSCHs, and the UE may not transmit the second set of PUSCHs. If the second symbol type is the SBFD symbol type, the UE may use the SRI indicated by the DCI to transmit the second set of PUSCHs, and the UE may not transmit the first set of PUSCHs.

For example, referring to FIG. 46, since the first set of PUSCHs are associated with SBFD symbol type, the UE may use the SRI indicated by the DCI to transmit the first set of PUSCHs, and the UE may not transmit the second set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type. If the first symbol type is the non-SBFD symbol type, the UE may use the SRI indicated by the DCI to transmit the first set of PUSCHs, and the UE may not transmit the second set of PUSCHs. If the second symbol type is non-SBFD symbol type, the UE may use the SRI indicated by the DCI to transmit the second set of PUSCHs, and the UE may not transmit the first set of PUSCHs.

For example, referring to FIG. 46, since the second set of PUSCHs are associated with the non-SBFD symbol type, the UE may use the SRI indicated by the DCI to transmit the second set of PUSCHs, and the UE may not transmit the first set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type. If the codepoint of the SRI field in the DCI points to an SRS resource associated with the first symbol type, the UE may use the SRI indicated by the DCI to transmit the first set of PUSCHs, and the UE may not transmit the second set of PUSCHs. If the codepoint of the SRI field in the DCI points to an SRS resource associated with the second symbol type, the UE may use the SRI indicated by the DCI to transmit the second set of PUSCHs, and the UE may not transmit the first set of PUSCHs.

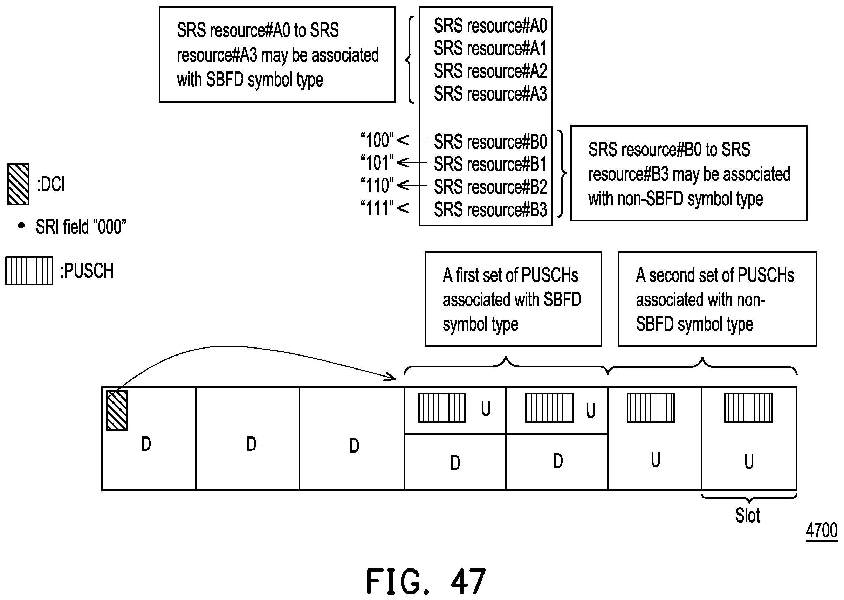

FIG. 47 illustrates a schematic diagram 4700 of multi-PUSCHs transmission according to one embodiment of the present disclosure, wherein a first set of PUSCHs may be associated with the SBFD symbol type, and a second set of PUSCHs may be associated with the non-SBFD symbol type. An SRS resource set for a given usage of value *codebook* or *nonCodeBook* may be configured to the UE (e.g., via a higher layer signaling from the network), wherein the SRS resource set may include one or more SRS resources associated with the SBFD symbol type and one or more SRS resources associated with the non-SBFD symbol type. For example, the SRS resource set may include SRS resources #A0, #A1, #A2, and #A3 associated with the SBFD symbol type and SRS resources #B0, #B1, #B2, and #B3 associated with the non-SBFD symbol type. The UE may obtain a codepoint (e.g., "000") from the SRI field of the DCI. Since the codepoint of the SRI field points to SRS resource #A0 associated with the SBFD symbol type, the UE may use the SRI indicated by the DCI to transmit the first set of PUSCHs, and the UE may not transmit the second set of PUSCHs.

In one embodiment, a UE may be scheduled with a multi-PUSCHs transmission by a DCI, a first set of PUSCHs of the multi-PUSCHs may be associated with a first symbol type and a second set of PUSCHs of the multi-PUSCHs may be associated with a second symbol type. If the number of PUSCHs of the first set of the PUSCHs is greater than the number of PUSCHs of the second set of PUSCHs, the UE may use the SRI indicated by the DCI to transmit the first set of PUSCHs, and the UE may not transmit the second set of PUSCHs.

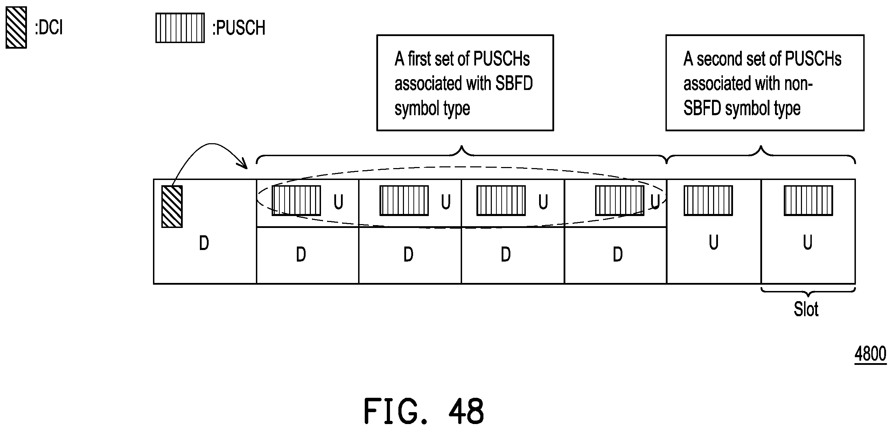

FIG. 48 illustrates a schematic diagram 4800 of multi-PUSCHs transmission according to one embodiment of the present disclosure, wherein a first set of PUSCHs may be associated with the SBFD symbol type, and a second set of PUSCHs may be associated with the non-SBFD symbol type. Since the number of PUSCHs of the first set of PUSCHs is greater than the number of PUSCHs of the second set of PUSCHs, the UE may use the SRI indicated by the DCI to transmit the first set of PUSCHs, and the UE may not transmit the second set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type. If the number of PUSCHs of the first set of PUSCHs is equal to the number of PUSCHs of the second set of PUSCHs, the UE could follow any embodiments in this disclosure to transmit the first set of PUSCHs and the second set of PUSCHs.

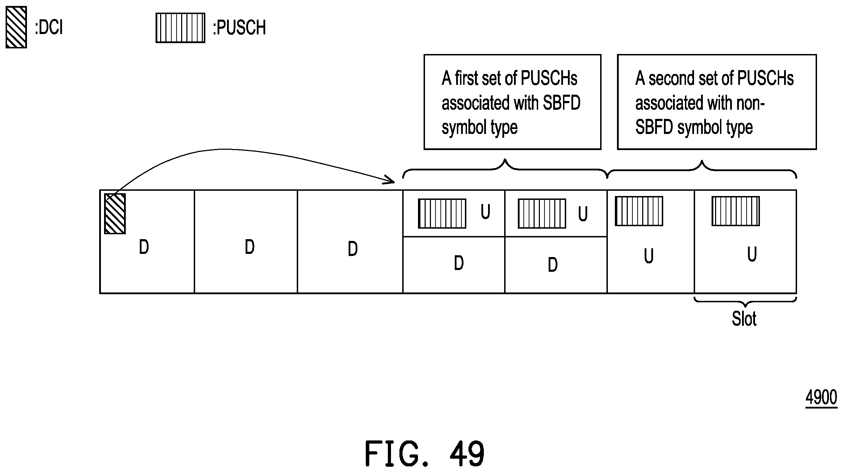

FIG. 49 illustrates a schematic diagram 4900 of multi-PUSCHs transmission according to one embodiment of the present disclosure, wherein a first set of PUSCHs may be associated with the SBFD symbol type, and a second set of PUSCHs may be associated with the non-SBFD symbol type. Since the number of PUSCHs of the first set of PUSCHs is equal to the number of PUSCHs of the second set of PUSCHs, the UE may use the SRI indicated by the DCI to transmit the first set of PUSCHs, and the UE may not transmit the second set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type, wherein the SRI indicate by the DCI may be applied to the first symbol type or the second symbol type. The SRI may be explicitly indicated by a DCI, radio resource control (RRC configuration), or MAC CE, or the SRI may be implicitly predetermined by specification. If the SRI is applied to the first symbol type, the UE may use the SRI indicated by the DCI to transmit the first set of PUSCHs, and the UE may not transmit the second set of PUSCHs. If the SRI is applied to the second symbol type, the UE may use the SRI indicated by the DCI to transmit the second set of PUSCHs, and the UE may not transmit the first set of PUSCHs.

For example, referring to FIG. 49, The UE may receive an indication (e.g., via the DCI or other signaling), wherein the indication may inform the UE that the SRI field of the DCI is applied to the SBFD symbol type. Based on the indication, the UE may use the SRI indicated by the DCI to transmit the first set of PUSCHs, and the UE not transmit the second set of PUSCHs.

In one embodiment, a UE may be scheduled with a multi-PUSCHs transmission by a DCI, a first set of PUSCHs of the multi-PUSCHs may be associated with a first symbol type, and a second set of PUSCHs of the multi-PUSCHs may be associated with a second symbol type. The first one of the first set of PUSCHs may be closer to the DCI than the first one of the second set of PUSCHs. That is, the time interval between the DCI and the first one of the first set of PUSCHs may be less than the time interval between the DCI and the first one of the second set of PUSCHs. The UE may use the SRI indicated by the DCI to transmit the first set of PUSCHs, and the UE may not transmit the second set of PUSCHs.

For example, referring to FIG. 49, since the first one of the first set of PUSCHs is closer to DCI than the first one of the second set of PUSCHs, the UE may use the SRI indicated by the DCI to transmit the first set of PUSCHs, and the UE may not transmit the second set of PUSCHs.

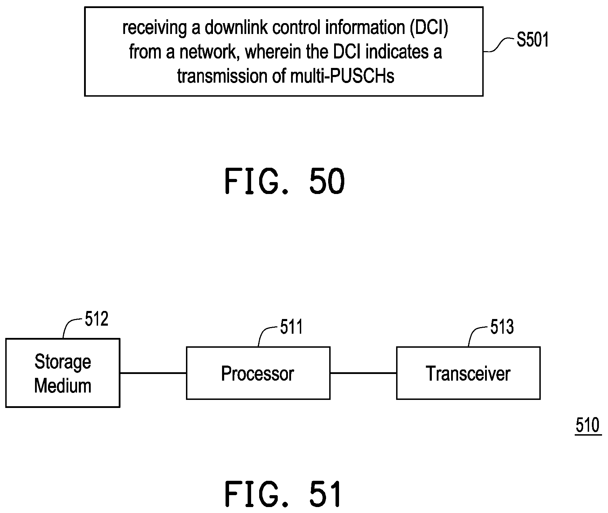

FIG. 50 illustrates a flowchart of a method of multi-PUSCHs transmission according to one embodiment of the present disclosure, wherein the method may be performed by a UE. In step S501, receiving a downlink control information (DCI) from a network, wherein the DCI indicates a transmission of multi-PUSCHs.

FIG. 51 illustrates a schematic diagram of a UE 510 according to one embodiment of the present disclosure, wherein the UE 510 may implement the methods described in figures 1-50 as well as their exemplary embodiments and alternative variations. The UE 510 may include a processor 511, a storage medium 512, and a transceiver 513. The processor 511 is coupled to the storage medium 512 and the transceiver 513.

The processor 511 could be implemented by using programmable units such as a microprocessor, a micro-controller, a digital signal processor (DSP), a field programmable gate array (FPGA), etc. the functions of the processor 511 may also be implemented with separate electronic devices or ICs. It should be noted that the functions of processor 511 may be implemented with either hardware or software.

The storage medium 512 may be, for example, any type of fixed or removable random access memory (RAM), a read-only memory (ROM), a flash memory, a hard disc drive (HDD), a solid state drive (SSD) or similar element, or a combination thereof, configured to record a plurality of modules or various applications executable by the processor 511.

The transceiver 513 may be configured to transmit and receive signals respectively in the radio frequency. The transceiver 513 may also perform operations such as low noise amplifying, impedance matching, frequency mixing, up or down frequency conversion, filtering, amplifying, and so forth. The transceiver 513 may include one or more digital-to-analog (D/A) converters or analog-to-digital (A/D) converters which are configured to convert from an analog signal format to a digital signal format during uplink signal processing and from a digital signal format to an analog signal format during downlink signal processing. The transceiver 513 may include an antenna array which may include one or more antennas to transmit and receive omnidirectional antenna beams or directional antenna beams.

The concept of "different symbol types" may apply to: SBFD (e.g., first symbol type for non-SBFD and second symbol type for SBFD); ISAC (e.g., first symbol type for communication only and second symbol type for both communication and sensing); or network energy saving (NES) (e.g., first symbol type for power saving mode and second symbol type for normal mode).

The multi-PUSCHs in this disclosure could be: a PUSCH repetitions (the PUSCH repetitions could be across SBFD symbol type and non-SBFD symbol type in different slots, where each repetition has either all SBFD symbol type or all non-SBFD symbol type); multi-PUSCHs scheduled by a single DCI (the multi-PUSCHs scheduled by a single DCI could be across SBFD symbol type and non-SBFD symbol type in different slots, where each PUSCH has either all SBFD symbol type or all non-SBFD symbol type); or a transport block (TB) over multiple slots (TBoMS) (the TBoMS could be across SBFD symbols and non-SBFD symbols in different slots, where each transmission within a slot has either all SBFD symbol type or all non-SBFD symbol type).

For multi-PUSCHs transmission across SBFD symbol type and non-SBFD symbol type in different slots (each PUSCH has either all SBFD symbol type or all non-SBFD symbol type), the following options could be applied: option 1: separate frequency domain resource allocation (FDRA) configurations/indications/interpretations may be applied to the SBFD symbol type and the non-SBFD symbol type; option 2: a single FDRA configuration/indication may be applied to one symbol type (e.g., SBFD or non-SBFD symbol type), and one or more resource block (RB) offset configurations/indications/determinations may be provided to the UE for determining the resource of the other symbol type; option 3: a PUSCH in a slot overlapping with RBs outside the UL usable physical resource blocks (PRBs) in the SBFD symbol type may be invalid (e.g. the PUSCH in the slot may be dropped); option 4: only the PUSCH in one symbol type may be valid, and the PUSCH in the other symbol type may be invalid; option 5: for a PUSCH in a slot overlapping with RBs outside UL usable PRBs in SBFD symbols, only the assigned PRBs within UL usable PRBs may be considered to be valid; or option 6: gNB may not schedule any PUSCH in the SBFD symbol type in a slot to make the PUSCH overlap with PRBs outside UL usable PRBs.

A network (or BS) in this disclosure may be a cell, a serving cell, a transmission reception point (TRP), an unlicensed cell, an unlicensed serving cell, an unlicensed TRP, a next Generation Node B (gNodeB), a gNB, an eNodeB (evolved NodeB), or an eNB, but not limited herein.

Combinations of embodiments disclosed in this disclosure is not precluded.

Based on the above, some low-complexity or low-cost UEs may not be capable of supporting simultaneous transmission of multiple uplink shared channels across different symbol types. These limitations necessitate a mechanism for the BS to adapt the scheduling strategy or reception configuration based on UE capabilities. The disclosure provides a solution that enable accurate uplink transmission at the UE, even when uplink transmission span different types of symbol. The UE of the disclosure may determine whether to transmit multi-PUSCHs across different symbol types or not according to a received configuration associated with UE capabilities. If the UE determines not to transmit the multi-PUSCHs across different symbol types, the UE may determine the configuration for the symbols to be transmitted and transmit the symbols accordingly. If the UE determines to transmit the multi-PUSCHs across different symbol types, the UE may apply various configurations to transmit the multi-PUSCHs.

## Claims

1. A method of multiple physical uplink shared channels, multi-PUSCHs, transmission, used by a user equipment, UE, (510), wherein the method comprising:
receiving a downlink control information, DCI, from a network, wherein the DCI indicates a transmission of multi-PUSCHs.

2. The method according to claim 1, wherein a first physical uplink shared channel, PUSCH, of the multi-PUSCHs is associated with a first symbol type, and a second PUSCH of the multi-PUSCHs is associated with a second symbol type.

3. The method according to claim 2, further comprising:
receiving a configuration, wherein
the configuration informs the UE (510) not to transmit the multi-PUSCHs across the first symbol type and the second symbol type; or
the configuration informs the UE (510) to transmit the multi-PUSCHs across the first symbol type and the second symbol type.

4. The method according to claim 3, wherein the configuration is associated with a UE capability.

5. The method according to claim 3, further comprising:
in response to informing the UE (510) not to transmit the multi-PUSCHs across the first symbol type and the second symbol type, determining whether a first time interval between the first PUSCH and the DCI is less than a second time interval between the second PUSCH and the DCI;
in response to the first time interval being less than the second time interval, transmitting the first PUSCH and not transmitting the second PUSCH; and
in response to the first time interval being greater than the second time interval, transmitting the second PUSCH and not transmitting the first PUSCH.

6. The method according to claim 3, further comprising:
in response to informing the UE (510) to transmit the multi-PUSCHs across the first symbol type and the second symbol type, receiving a first sounding reference signal, SRS, resource set and a second SRS resource set from the network, wherein the first SRS resource set is applied to the first symbol type and the second SRS resource set is applied to the second symbol type;
transmitting the first PUSCH by using a codepoint of an SRS resource indicator, SRI, field in the DCI, wherein a first SRS resource identified by the codepoint is associated with the first SRS resource set; and
transmitting the second PUSCH by using the codepoint of the SRI field in the DCI, wherein a second SRS resource identified by the codepoint is associated with the second SRS resource set.

7. The method according to claim 6, wherein the first SRS resource set and the second SRS resource set are for same usage.

8. The method according to claim 2, wherein a first physical uplink control channel, PUCCH, configured for the first symbol type is different from a second PUCCH configured for the second symbol type.

9. The method according to claim 2, wherein the first symbol type is a non-subband full duplex symbol type and the second symbol type is a subband full duplex symbol type.

10. A user equipment, UE, (510) of multiple physical uplink shared channels (multi-PUSCHs) transmission, comprising:
a transceiver (513); and
a processor (511), coupled to the transceiver (513), wherein the processor (511) is configured to:
receive a downlink control information, DCI, from a network via the transceiver (513), wherein the DCI indicates a transmission of multi-PUSCHs.

11. The UE (510) according to claim 10, wherein a first physical uplink shared channel, PUSCH, of the multi-PUSCHs is associated with a first symbol type, and a second PUSCH of the multi-PUSCHs is associated with a second symbol type.

12. The UE (510) according to claim 11, wherein the processor (511) is further configured to:
receive a configuration via the transceiver (513), wherein
the configuration informs the UE (510) not to transmit the multi-PUSCHs across the first symbol type and the second symbol type; or
the configuration informs the UE (510) to transmit the multi-PUSCHs across the first symbol type and the second symbol type.

13. The UE (510) according to claim 12, wherein the configuration is associated with a UE capability.

14. The UE (510) according to claim 12, wherein the processor (511) is further configured to:
in response to informing the UE (510) not to transmit the multi-PUSCHs across the first symbol type and the second symbol type, determine whether a first time interval between the first PUSCH and the DCI is less than a second time interval between the second PUSCH and the DCI;
in response to the first time interval being less than the second time interval, transmitting the first PUSCH via the transceiver (513) and not transmitting the second PUSCH; and
in response to the first time interval being greater than the second time interval, transmitting the second PUSCH via the transceiver (513) and not transmitting the first PUSCH.

15. The UE (510) according to claim 12, wherein the processor (511) is further configured to:
in response to informing the UE (510) to transmit the multi-PUSCHs across the first symbol type and the second symbol type, receive a first sounding reference signal, SRS, resource set and a second SRS resource set from the network via the transceiver (513), wherein the first SRS resource set is applied to the first symbol type and the second SRS resource set is applied to the second symbol type;
transmit the first PUSCH via the transceiver (513) by using a codepoint of an SRS resource indicator, SRI, field in the DCI, wherein a first SRS resource identified by the codepoint is associated with the first SRS resource set; and
transmit the second PUSCH via the transceiver (513) by using the codepoint of the SRI field in the DCI, wherein a second SRS resource identified by the codepoint is associated with the second SRS resource set.
